(19) Europäisches Patentamt
European Patent Office
Office européen des brevets

(11) EP 1 333 608 A2

(12) **EUROPEAN PATENT APPLICATION**

(43) Date of publication:
**06.08.2003 Bulletin 2003/32**

(51) Int Cl.7: **H04L 1/04**

(21) Application number: **02022272.5**

(22) Date of filing: **04.10.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **31.01.2002 JP 2002023325**

(71) Applicant: **FUJITSU LIMITED**
**Kawasaki-shi, Kanagawa 211-8588 (JP)**

(72) Inventors:
- **Kaku, Takashi, Fujitsu Limited**
  **Kawasaki-shi, Kanagawa 211-8588 (JP)**
- **Tanaka, Yoshinori, Fujitsu Limited**
  **Kawasaki-shi, Kanagawa 211-8588 (JP)**

(74) Representative: **HOFFMANN - EITLE**
**Patent- und Rechtsanwälte**
**Arabellastrasse 4**
**81925 München (DE)**

(54) **Data transmission system and data transmission method for cable television**

(57) A transmission part (5 or 6) produces a copy of a given narrow-band signal so as to obtain a number of same signals according to predetermined orthogonal sequence, and performs respective phase rotations on the thus-obtained signals according to the present invention orthogonal sequence. A reception part (5 or 6) performs reverse phase rotation on the reception signals according to the predetermined orthogonal sequence, and then performs mutual addition thereon so as to restore the narrow-band signal.

FIG.3

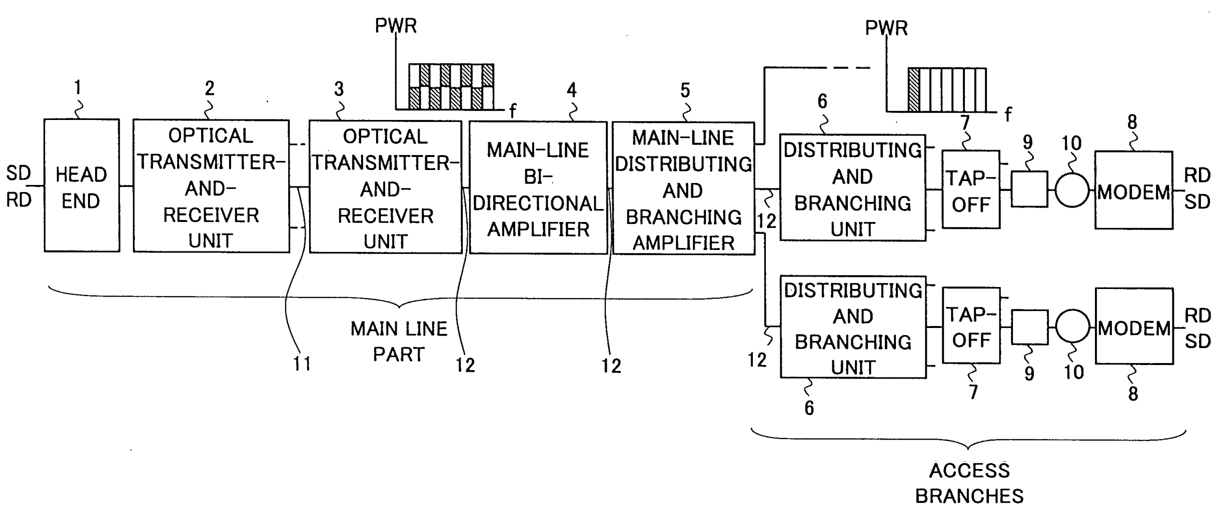


EP 1 333 608 A2

## Description

BACKGROUND OF THE INVENTION

1. Field of the Invention

The present invention relates to a data transmission system in a cable television system or the like which enables data transmission at an improved rate by removing noise such as streamed noise and a data transmission control method therefor.

2. Description of the Related Art

CATV(Cable Television; Community Antenna Television) is already put into practical use in various configurations. In addition, the cable television telephony and the cable television Internet which uses this cable television system are also put to practical use. FIG. 1 illustrates one example of such a cable television system. As shown in the figure, a broadcast facility 201 includes a status monitor unit, a guide channel generation unit, a retransmission unit, and an access broadcasting unit, and, also, the cable television system includes a home terminal control/integration system 202, a CATV-LAN (Local Area Network) and the Internet 204.

Furthermore, the system includes a head end including a mixer, a distributor, an electricity-to-light converter (E/O) for transmitting an optical signal, a light-to-electricity converter (O/E) for receiving the optical signal, a coax amplifier for transmitting/receiving an electric signal, optical fibers 206-209, coax cables 210, coax networks 211-213 through which a plurality of subscribers are connected, and so forth. In subscribers' houses 214, home terminals 215, television receivers 216, cable modems 217 and personal computers 218 are provided for communication through the CATV system.

In addition, black triangle marks in the coax networks 211-213 shown in the figure represent bidirectional coax amplifiers, while black square marks in the coax networks 211 and 212 represent optical nodes. In addition, protective devices to draw coax cables into subscribers' houses 214 are represented by white square marks. In addition, telephones or facsimile apparatus may be connected to the cable modem 217 of the subscriber house 214, although not shown. A plurality of subscribers' houses are connected to the coax networks 211-213, respectively.

For example, in a cable television system by means of only utilizing coaxial cables, a plurality of coax networks 213 may be connected to the coaxial cables 210 sequentially or in parallel, and, thus, tens of thousands of subscribers' houses may be connected to one main line. Then, data may be transmitted to the head end 205 in order to receive interactive service in addition to image reception service in each subscriber's house.

In such a case, for example, a frequency band of 70 through 450 MHz is used for downlink direction, while a frequency band of 10 through 50 MHz is used for uplink direction. As for data transmission rate, 27 Mbps is provided by 64 QAM on downlink direction while 4.5 Mbps is provided by QPSK on uplink direction, for example. In addition, as the transmission loss on the coaxial cable is 54 dB/km or so, the coax amplifier should be provided every 300-400 m, for example. Therefore, in a transmission range of tens of kilometers, approximately tens of coax amplifiers should be connected.

In addition, as a noise source in the frequency band of downlink direction, there are cordless telephones, amateur radio, and so forth. However, as the transmission frequency band is comparatively wide, it is easy to avoid using of a frequency band having many noise sources. Accordingly, the head end 205 can transmit data, keeping a proper S/N to each subscriber's house. However, as for the frequency band on uplink direction, various noises collectively reach the head end 205, i.e., noise generated by respective home electric appliances of each subscriber's house, noise caused by armature radio, reflection noise due to open end of the coaxial cable, and so forth, collectively. Furthermore, many coax amplifiers provided on the transmission path amplify also the noises. Such a collection of noise is referred to as a streamed noise.

In order to solve the problem of streamed noise, for example, the optical fibers 206-209 may be used for connecting between the coax networks 211, 212 and the head end 205, and approximately 500 subscribers are connected to the coax networks 211, 212 according to HFC (Hybrid Fiber Coaxial) system. In the HFC system shown in FIG. 1, the optical fibers 206, 208 are provided on downlink direction while the optical fiber 207, 209 are provided on uplink direction. However, it is also possible to only use a single optical fiber for both downlink and uplink directions. As such a backbone optical fiber has a transmission loss on the order of 0.5 dB/km, the optical amplifier should be provided merely every tens of kilometers. Accordingly, in comparison to a system employing coaxial cables, the number of subscribers connected to each main line is reduced, and, thereby, the streamed noise can be reduced by reducing the number of amplifiers concerned as well.

Fig. 2 shows a feature of the related art on the above-mentioned HFC system. This system includes an outside antenna system 221 on the end of a broadcast facility, a head end 222, an optical transmitter and receiver 223, the Internet 224, a cable router (CMTS: Cable Modem Configuration System) 225, an optical fiber 226, an optical node 227, a main line amplifier branching and distribution unit 228, main line amplifiers 229, 230, and tap-offs 231, 232 connected to subscribers' houses 233, 234.

The head end 222 is equivalent to the head end 205 of FIG. 1, the optical transmitter and receiver 223 is equivalent to a transmitter-and-receiver for optical signal including the electricity-to-light transducer E/O and light-to-electricity transducer E/O of FIG. 1. In addition, the optical node 227 is equivalent to the optical node represented by the black dot mark in the coax network of FIG. 1. The subscribers' houses 233, 234 are equivalent to the subscribers' houses 214 of FIG. 1. The coaxial cable is drawn in, through the protective device, and a signal is distributed therefrom into a TV receiver and a cable television modem through the distributor in the house.

Assuming that, for example, the transmission rate per subscriber is 512 kbps, while simultaneous access rate on 1000 subscribers is 1/100, it becomes necessary to prepare a transmission band of 512 [kbps] $\times$ 1000 $\times$ (1/100) = 5120 [kbps] . In addition, assuming that access to the Internet 224 is performed mainly in each subscriber's house, a transmission band around 1,024 Mbps is needed as approximately 1/5 the transmission band on downlink direction is needed for uplink direction.

In the above-described HFC system, a design is made such that the number of subscribers is around 500 per cell while the transmission rate of 256 kbps each is ensured. Then, in order to improve this into the transmission rate of 2 Mbps, the number of optical fibers on the main line should be increased and thus, the number of subscribers accommodated by the coax network connected to the optical fiber should be reduced. In this case, a so-called deep fiber state may occur in that almost all the transmission path is provided by the optical fiber as the cell is made to become very small, and the optical fiber is laid to a position very close to the subscriber house or is laid directly to the subscriber house.

As described above, in a cable television system according to the above-described related art, it may be difficult to properly receive information from subscribers without an error due to noise from each subscriber house, induced noise and so forth accumulated in sequence in data transmission along uplink direction from subscriber houses to the head end. Accordingly, the above-mentioned HFC system is considered in which, coax networks are provided in which the number of subscribers for each cell is reduced, and, then, optical fibers are used for connecting between the respective coax networks and the head end, so as to reduce the streamed noise.

However, in that case, also as described above, it is conceivable that each optical fiber is extended near to the subscriber house or to the subscriber house in order to reduce the streamed noise. However, there is the problem that the above-mentioned deep fiber state occurs that the cost-saving advantage of cable television system employing coaxial cables is lost due to increase in the total length of optical fibers newly placed.

In addition, it is conceivable that a spectrum spread technique of CDMA (Code Division Multiple Access) formulas may be applied in order to reduce the above-mentioned streamed noise. However, in case spectrum spread processing is applied according to conventional scheme, transmission efficiency may be degraded.

SUMMARY OF THE INVENTION

The present invention has been devised in order that reduction in streamed noise is achieved without decrease in transmission efficiency with avoidance of the above-mentioned deep fiber state.

A data transmission system according to the present invention includes:

a transmission part producing a copy or copies of a given narrow-band signal so as to obtain a number of identical signals according to a predetermined orthogonal sequence, and performing respective phase rotations on the thus-obtained signals according to the present invention orthogonal sequence; and

a reception part performing reverse phase rotations on the reception signals according to the predetermined orthogonal sequence and then performing mutual addition thereof so as to restore the original narrow-band signal.

Thereby, the relevant signal can be positively restored as the once made phase rotations are cancelled out, while, noise components such as non-reverent signals, in particular, having orthogonal relationship with the relevant signal, are cancelled out through the same phase rotation canceling operation. Accordingly, it is possible to effectively eliminate noise components such as streamed noises.

Other objects and further features of the present invention will become more apparent from the following detailed description when read in conjunction with the accompanying drawings.

BRIEF DESCRIPTION OF THE DRAWINGS

FIG. 1 illustrates a cable television system in the related art;

FIG. 2 illustrates one example of a data transmission system in the related art;

FIG. 3 illustrates one embodiment of the present invention;

FIGS. 4A and 4B illustrate a modem used in the embodiment shown in FIG. 3;

FIG. 5 illustrates a zero point signal extraction part in the configuration shown in FIG. 4A;

FIGS. 6A through 6D illustrate noise removal operation according to the embodiment of the present invention:

FIGS. 7A through 7E illustrate possible various zero point insertion manners according to the embodiment of the present invention;

FIGS. 8A through 8G illustrate zero point insertion and noise removal operation according to the embodiment of the present invention;

FIG. 9 illustrates noise removal function in the embodiment of the present invention;

FIG. 10 illustrates noise removal part in the embodiment of the present invention;

FIG. 11 illustrates an interpolation estimation part in the embodiment of the present invention;

FIGS. 12A through 12D illustrate signal spectrums in the embodiment of the present invention;

FIGS. 13 through 16 illustrate orthogonal multiplexing technology applicable to the embodiment of the present invention;

FIGS. 17A through 17C illustrate a multiplexed signals and demodulated signals in the embodiment of the present invention;

FIG. 18 illustrates a branching distributing part in the embodiment of the present invention;

FIG. 19 illustrates a head end in the embodiment of the present invention;

FIG. 20 illustrates a main line system in the embodiment of the present invention;

FIG. 21 illustrates functions of phase rotation and frequency shift in the embodiment of the present invention;

FIG. 22 illustrates functions of frequency shift and phase inverse rotation in the embodiment of the present invention;

FIG. 23 illustrates another embodiment of the present invention applying an OFDM formula; and

FIGS. 24A and 24B illustrate transmission bands in the embodiment of the present invention.

## DETAILED DESCRIPTION OF THE PREFERRED EMBODIMENT

FIG. 3 illustrates a preferred embodiment of the present invention. As shown in the figure, a transmission system in the embodiment includes a head end 1, optical transmitter and receiver parts 2, 3, a main line bi-direction amplifier 4, a main line distribution and branching amplifier 5, a distributing and branching part 6, a tap-off 7, a modem 8, a protective device 9, and a distributor 10. Optical fibers 11 and coaxial cables 12 are used for connecting these parts. In this system, reception data RD and transmission data SD are processed.

This transmission system forms the above-mentioned HFC system. In this system, the optical transmitter and receiver part 2 on the head end side is connected with the one or plurality of optical transmitter and receivers parts 3 via the one or plurality of optical fibers 11. Then, the optical transmitter and receiver part 3, the main line bi-direction amplifier 4, and the main line distributing and branching amplifier 5 are connected together in sequence by the coaxial cables 12. The coaxial cables 12 also connect between the main line distributing and branching amplifier 5 and the plurality of distributing and branching parts 6. The distributing and branching part 6, tap-off 7, protective device 9, and distributor 10 are connected together in sequence, and, then, connection is further made to the modem 8, via the coaxial cables.

As for an access part (or access branch) between the distributing and branching part 6 and the modem 8 of the subscriber house, noise is removed by a technique of noise removal through zero point insertion scheme. As for a main line part between the main line distributing and branching amplifier 5 and the head end 1, a narrow-band signal including transmission data is copied a number of times according to the number of phases of a predetermined orthogonal sequence, in the uplink transmission part, and, then, phase rotation is performed on each thereof according to the phase of the orthogonal sequence. As for the receiving part, inverse phase rotation is performed according to the orthogonal sequence phases, and thereby, the data signals are made to have a same phase while the other noise signals are made to have opposite phases, then, integrating summation is performed thereon, and, thus, the relevant data is restored. As the noise parts are made to have opposite phases, they are cancelled out automatically. Thereby, streamed noise can be reduced even in the case the coaxial cables are used for the main line so as to avoid deep fiber state. As orthogonal sequences concerned, Hadamard sequences, M-sequences, Gold sequences, Wavelet sequences or the like may be used.

In FIG. 3, relationship in transmission band between the main line part and access part is shown as graphs in each of which the vertical scale represents the power PWR while the horizontal scale represents the frequency f. In the access part, data transmission is made by a narrow-band signal with zero point insertion, while, in the main line part, multiple copy of narrow-band signal is made, phase rotation is made according to the orthogonal sequence phase, then, the thus-obtained respective signals are transformed into division bands obtained from division of usable band, and, then, they are transmitted. As for the different branches of the access part, a different orthogonal sequence is assigned.

FIG. 4A illustrates a configuration of a modem in each access part (access branch) shown in FIG. 3, corresponding to the modem 8 or a modem of the distributing and branching unit 6 shown in FIG. 3. FIG. 4B illustrates a relevant transmission signal in which the vertical scale represents the power PWR while the horizontal scale represents the time axis. In FIG. 4A, in a transmission part, transmission data SD is processed by a converter 21 including a scramble processing part (SCR) and serial/parallel conversion part (S/P), a code converter 22 includes a gray code/natural code conversion part (G/N) and finite sum processing part (finite sum), a signal point generating unit 23 generates signal points based on a signal given. Further, this part includes a roll-off filter (ROF) 24, a digital-to-analog conversion unit (D/A) 25, a lowpass filter (LPF) 26, a modulation unit (MOD) 26, a bandpass filter (BPF) 27, a transmission clock generating unit 28 and a zero point insertion unit 29. The signal processed therethrough is sent out via a transmission line TX-line. This transmission part of the modem thus performs orthogonal amplitude modulation (QAM) and sends out the thus-obtained signal.

In a reception part of the modem, as shown in FIG. 4A, a reception signal RD received via a reception line RX-line is processed by a bandpass filter (BPF) 31, a demodulation unit (DEM) 32, a lowpass filter (LPF) 32, an analogue-to-digital conversion unit (A/D) 33, a roll-off filter (ROF) 35, a timing extracting unit (TIM) 36, a phase synchronization oscillation part (PLLVCXO) 37, a reception clock generating unit (RX-CLK) 38, an equalization unit (EQL) 39, a carrier automatic phase control unit (CAPC) 40, a determination unit (DEC) 41, a code conversion unit 42 including a differential processing part (DIFF) and natural code/gray code conversion part (N/G), a converter 43 including a parallel-to-serial conversion part (P/S) and a descrambling part (DSCR), and a noise removal unit 44.

The transmission data SD is scrambled by the converter 21, and, then, it is converted into parallel data corresponding to the number of modulation signals or the like, and then, they are converted into natural code from gray code in the code conversion unit 22. After that, also in the code conversion unit 22, finite sum processing is performed so that demodulation can be made regardless of the demodulation reference phase. Then, in the signal point generating unit 23, it is converted into the number of signal points corresponding to the predetermined number of modulation signal points. Then, the high-band components are removed by the roll-off filter 24. Then, it is converted into an analog signal by the digital-to-analog conversion unit 25. The signal is then made to pass through the lowpass filter (LPF) and modulator (MOD) 26. Thus, it is modulated, and, after that, it is limited in transmission band by the bandpass filter 27, and it is sent out to the transmission line TX-line.

The signal received via the reception line RX-line is processed by the reception part. Specifically, useless band component is removed therefrom by the bandpass filter 31. Then, it is demodulated by the demodulator (DEM) and is made to pass through the lowpass filter (LPF) 32. Thus, the high band component is removed by the lowpass filter. Then, it is converted to a digital signal by the analogue-to-digital conversion unit 33, and, then, it is made to pass through the roll-off filter 34 and the equalization unit 39. Thus, waveform equalization processing and so forth is performed. Then, phase adjustment is done by the carrier automatic phase control unit 40, and, then, data is determined by the determination unit 41. Then, differential processing and natural code/gray code conversion processing are performed by the unit 42. The, parallel-to-series code conversion processing and descrambling processing are performed there. Thereby, the reception data RD is obtained.

In this modem, for example, the modulation unit 26 performs 64QAM (Quadrature Amplitude Modulation) or the like, while the demodulation unit 32 performs corresponding inverse demodulation processing. Thus, the part enclosed by the dotted line including the transmission line TX-line and reception line RX-line acts as a QAM transmission path.

FIG. 4B shows an example of a signal waveform when signal transmission is made with Nyquist intervals in which zero points appear every predetermined point corresponding to the transmission rate except the peaks of the signal. In the figure, arrows represent data corresponding to signal points having the maximum amplitudes.

Further, according to the embodiment of the present invention, a zero point insertion unit 29 a noise removal unit 44 is provided. For example, zero points indicated by black dots in FIG. 4B are inserted by the zero point insertion unit 29. In other words, signals having the signal level of zero are inserted between effective data signal points.

The zero point insertion is performed along the time axis, and, the transmission band is determined according to the number of zero points thus inserted. Specifically, various methods may be applied for this purpose. For example, in inverse Fourier transform processing, by inputting same data in parallel, output data includes copied data. Thereby, insertion of zero point between the data is also achieved along the time axis. Thus, insertion of zero point between signal points can be achieved. In this case, the required transmission band becomes twice in comparison to the case where no zero point is inserted. Similarly, when three sets of same data are input in parallel to the original set of data in the inverse Fourier transform processing, insertion of three zero points along time axis is achieved. Also in this case, the required transmission band becomes four times.

The zero point frequency indicating zero point insertion positions is detected by the phase synchronization oscillation unit 37 of the receiving part, and the timing signal thereof is provided to the reception clock generation unit 38, which then provides data signal timing and zero signal timing to the noise removal unit 44. Thereby, the noise component carried on each zero point is extracted, and, as this noise component is also carried on each data signal point, the noise carried on the data signal point is removed by using the detected noise component.

FIG. 5 illustrates a zero point extraction configuration which is achieved by a function of the timing extraction unit 36 and the phase synchronization oscillation unit 37. As shown in the figures, this part includes a power calculation part {PWR) 51, a bandpass filter (BPF) 52, a vector forming part 53, a comparing part 54, a lowpass filter (LPF) 55, a secondary phase synchronization circuit (phase locked loop) 56, a digital-to-analog conversion part (D/A) 57, a voltage controlled crystal oscillator (VCXO) 58 and a frequency dividing part 59.

In this part shown in FIG. 5, the power of the signal given by the roll-off filter 34 is calculated by squaring operation, for example, the thus-obtained power is made to pass through the bandpass filter 52, and then, it is input to the vector forming part 53, which then forms a vector with an orthogonal signal. Then, it is compared with the zero point signal given from the frequency dividing part 59 in the comparing part 54. The thus-obtained comparison difference is input into the secondary phase synchronization circuit 56 through the lowpass filter 55. Then, it is converted into an analog control voltage by the digital-to-analog conversion part 57, and the oscillation output phase in the voltage controlled crystal oscillator 58 is controlled by this analog control voltage. After that, the output signal of the voltage controlled crystal oscillator 58 is provided to the analogue-to-digital conversion unit 33 shown in FIG. 4A as a sampling timing signal. In addition, frequency dividing is done by the frequency dividing part 59 so that the zero point signal which indicates the locations of the zero points inserted in the transmission part is produced. Then, it is input to the comparison part 54, and, thereby, it is possible to control the output signal of the voltage controlled crystal oscillator 58 so as to cause the output signal to be in phase with the zero point signal.

FIGS. 6A through 6D illustrate the noise removing operation. FIG. 6A shows insertion of zero points (black dots having signal level of zero) between data signals S1 S2, S3, ···. This zero point insertion is performed by the zero point insertion unit 29. FIG. 6B shows the reception signal in which the data signals S1 S2, S3. ··· have noises N1, N2, N3, ··· carried together, while the zero point signals have noises Na, Nb, Nc, ··· carried together.

FIG. 6C shows a manner in which the noises Na, Nb, Nc, ··· are extracted by means of thinning-out processing, and, then, by using the thus-extracted data, the noises N1, N2, N3, ··· carried with the data signals S1, S2, S3, ··· are obtained by means of interpolating estimation processing. That is, as only the noise component is carried on each zero point, the noise component is extracted by the zero point extraction, and, then, by using the thus-extracted data, the noise component on the data signal is estimated. FIG. 6D shows a state in which the data signals S1 S2, S3, ··· are reproduced after the noises estimated by the above-mentioned processing described with reference to FIGS. 6B and 6C are removed. In this case, assuming that the frequency of the data signals S1, S2, S3, ··· are 6 MHz, the signal frequency becomes 12 MHz as a result of the zero point insertion where a single zero point is inserted between adjacent data signals. When three zero points are inserted between each adjacent data signals, the signal frequency becomes four times, i.e., 24 MHz.

FIGS. 7A through 7E illustrate various ways of zero point insertion. FIG. 7A shows a case where one zero point is inserted for every three data signal points; FIG. 7B shows a case where one zero point is inserted for every two data signal points; FIG. 7C shows a case where one zero point is inserted for every single data signal point. The way of FIG. 7C is the same as the way shown in FIG. 6A. FIG. 7D shows a case where two zero points are inserted between each adjacent data signal points; and FIG. 7E shows a case where three zero points are inserted between each adjacent data signal points. In any case, the zero point is extracted in the receiving side according to a predetermined setting made beforehand between the transmission and reception sides as to the zero point insertion manner, noise component carried by the data signal S can be properly removed by using noise component carried on each zero point by the basically same scheme as that described above with reference to FIGS. 6A through 6D.

FIGS. 8A through 8G further illustrate operation of the noise removal in a different viewpoint. FIG. 8A shows relevant parts in the modem of the access part or access branch shown in FIG. 4A. In the figure, a transmission signal generating part 61 is acted by the signal point generating unit 23, while a zero point insertion part 62 is acted by the zero point insertion unit 29. A noise removal part 64, a frequency shift and thinning-out part (DCM) 65, an interpolation and reverse shift part (IPL) 66 are acted by the noise removal unit 44, and a reception signal point reproduction part 67 is acted by the equalization unit 39, determination unit 41, and so forth.

The transmission signal of -A through +A [kHz] is input to the zero point insertion part 62 from the transmission signal point generation part 61, as shown in a diagram (a), and zero point insertion is achieved by one point between data signals as described above. Thereby, as shown in diagram (b), the frequency band is doubled, into -2A through +2A [kHz]. Then, it is sent to the Nyquist transmission path 63, which includes the transmission path of the access part (branch).

In the reception end, the noise occurring during the transmission and thus carried by the reception signal of the above-mentioned frequency band of -2A through +2A is removed, into the state shown in (d). It is then input to the reception signal point reproduction part 67. In this case, assuming that the above-mentioned A = 96 [kHz], insertion of a single zero point between adjacent data signals having the transmission frequency band of -96 kHz through +96 kHz results in the transmission frequency band of -192 kHz through +192 kHz on the Nyquist transmission path 63 which is twice the original one.

FIGS. 8B through 8G illustrate signal levels on the points indicated in FIG. 8A, as the numerals (1) through (6), respectively, before being input to the reception signal point reproduction part 67. For example, the signal having passed through the Nyquist transmission path 63 includes noise which may be expressed by respective signal band components 'a', 'b', 'c' and 'd' of the four frequency bands, i.e., the bands of -2A through -A, -A through 0, 0 through +A, +A through +2A. As the noise level becomes higher as the noise component is carried on a lower frequency band, the above-mentioned signal components have the following level relationship:

$$a > b > c > d$$

Frequency shift of +A [kHz] is performed by the frequency shift and thinning-out part 65. Thereby, as shown in FIG. 8C, each band component is shifted by +A. However, the component d is shirted to the band of -2A through -A through a returning effect. Then, thinning-out processing is performed. Specifically, the data signals S1+N1, S2+N2, S3+N3, ... shown in FIG. 6B are thinned out. Thereby, only the zero points are extracted. Thereby, the noises Na, Nb, Nc, ... carried on the zero points can be extracted. Thereby, the respective band components become those as shown in FIG. 8D. In FIG. 8D, arrows express generation of band components a, b, c and d due to the returning effect caused by the thinning-out processing.

Then, by the subsequent interpolation (IPL) and reverse shift part 66, by using the noise components on the above-mentioned zero points obtained through the thinning-out processing, noise components carried on the signal points are estimated. As shown in FIG. 6C, the noises N1, N2, N3, ... on the signal points are estimated by using the noise Na, Nb, Nc, ... on the zero points. Thereby, as shown in FIG. 8E, the signal band becomes -A through +A. Then, by the reverse shifting operation, the frequency band components are shifted by -A kHz. Accordingly, as shown in FIG. 8F, the frequency band components become -2A through 0.

Then, the noise removal part 64 subtracts the band components having undergone shift of -A kHz shown in FIG. 8F from the original signal level profile shown in FIG. 8B. Returning to FIGS. 6A through 6D, the noises N1, N2, N3, ... obtained from th reception signal shown in FIG. 6C are used for subtraction from the reception signal shown in FIG. 6B. Thereby, as shown in FIG. 6D, the data signal S1, S2, S3, ... are obtained through the noise removal. That is, as shown in FIG. 8G, the band components 'a' and 'b' including large noise components are removed, and, then, the data signal can be restored by using the band components 'c' and 'd'. The noise removal part should be configured according to the number of zero points inserted by the transmitting side.

FIG. 9 illustrates the noise removal function by an experiment. The reference numerals same as those shown in FIG. 8 are given to the same parts. In the figure, an example of signal measurement result at each point was shown. Four signal points clearly appears in the signal output from the transmission signal point generation part 61 as shown. Then, a zero point was inserted by the zero point insertion part 62, and, thus, at the center, the zero point appears. Then, as the Nyquist transmission path 63 was passed through, which was a CATV transmission path and had a spectrum of noise (6 through 60 MHz) shown, for example, a large noise occurred and thus was carried by the relevant signal, and, as a result, the originally provided data signal points could not be found out due to the thus-carried noise, as shown in the figure.

However, the noise was extracted the by above-mentioned frequency shift and thinning-out (DCM) part 65 and the interpolation (IPL) and reverse shift part 66, as described above. Then, the noise was removed from the reception signal by the noise removal part 64. After that, as shown in the figure, the originally provided four signal points were made to clearly appear approximately same as the original ones. In this experiment, noise removal gain was approximately 45 dB.

FIG. 10 illustrates the above-mentioned noise removal part 44, which includes a frequency shift part 71, a thinning-out part 72, an interpolation and estimation part 73, a frequency reverse shift part 74, a delay circuit 75, an adding part 76, and a delay circuit 77. 'T' in the delay circuits 75 and 77 denotes a sampling interval. The frequency shift part 71 and thinning-out part 72 act as the frequency shift and thinning-out part (DCM) 66, the interpolation estimation part 73 and frequency reverse shift part 74 act as the interpolation (IPL) and reverse shift part 66, and the addition part 76 acts as the noise removal part 64. The delay circuits 75 and 77 have pluralities of delay devices T/4 connected therein so as to provide appropriate delay times.

The reception signal A=x+jy is multiplied with B=f=cosωt+jsinωt in the frequency shift part 71. The multiplication output signal C thus becomes C=(xcosωt-ysinωt)+j(Xsinωt+ycosωt). Then, it is thinned out in the thinning-out part 72 according to the timing of zero point signal extracted on the basis of zero point frequency, the noise component-carried on the zero point is input as a signal D to the interpolating estimation part 73.

In the interpolating estimation part 73, the noise component carried on the zero point is used, and, the noise component on the signal point is estimated by interpolation operation. Then, the thus-obtained signal E is input into the frequency reverse shift part 74. In this frequency reverse shift part 74, the signal F (* denotes complex conjugate) having passed through the delay circuit 77 is multiplied with the signal E. In this case, the signal B is multiplied to the reception signal A in the frequency shift part 71, and thus, frequency shifting operation is performed. Then, the reverse frequency shifting operation is performed through multiplication of the signal F of complex conjugate of the signal B to the output signal E in the interpolation estimation part 73. Then, a signal k obtained after the noise removal can be output through subtraction, in the addition part 76, of a signal G obtained through frequency reverse shifting from the signal H obtained through delay of the reception signal A performed by the delay circuit 75.

FIG. 11 illustrates the interpolation estimation part, and shows a configuration of the interpolation estimation part 73 shown in FIG. 10. As shown, it includes a zero point insertion part 81, a delay device (T /4) 82, a multiplier 83, and an adder (S) 84. C1, C2, C3, ... Cm represent filter coefficients, respectively. The output signal D of the thinning-out part 72 is input, and a zero point is inserted in the zero point insertion part 81. Thereby, a signal having the same frequency band as that of the reception signal A (see FIG. 10) is obtained. Then, the noise component carried on the zero point is used, in an interpolation filter configuration including the delay device 82, multiplier 83 and adder 84, and, thus, the interpolation estimated signal E including the noise component on the data signal location can be output.

In this case, when one zero point is inserted between data signals on the transmitting end, one data signal between zero points is thinned out, and, then, one zero point is inserted thereto so that a signal having the same frequency band as that of the reception signal A is obtained. Then, the filter coefficients C1, C2, C3, ... Cm are determined such that the noise carried on the zero point be also carried on a zero point inserted by the zero point insertion part 81. Thus, the interpolation filter is formed. Accordingly, in case where two zero points are inserted between data signals in the transmission end, each data signal point is thinned out, the two zero points are extracted, after that, one zero point is inserted instead so that a signal having the same frequency band as that of the reception signal is obtained. Then, based on noise component carried by the two noise points, interpolation processing is performed so that noise component be carried also by the zero point inserted by the zero point insertion part 81. Then, frequency reverse shifting operation is performed on the interpolation estimated signal E by the frequency reverse shift part 74 as described above, and it is made agree in the frequency band with the reception signal A. Then, as the signal G includes the noise component carried at the location of data signal of the reception signal A, it is input to the addition part 75, it is subtracted from the signal H having delayed from the reception signal A. Thereby, the noise in the signal G can be removed. Thus, the noise in the access part can be removed positively.

FIGS. 12A through 12D illustrate signal spectrums in the embodiment of the present invention, where the horizontal scale denotes frequency, while the vertical scale denotes power PWR. FIG. 12A shows a base transmission band, and, shows a narrow-band signal of 3MHz, for example. FIG. 12B shows a transmission band of a signal having three zero points between each adjacent data signals, as in a case described above in the description of noise removal. As a result, a band of 12-24 MHz of 4 times of 3 MHz is obtained. FIG. 12C shows a transmission band of a signal having undergone removal of noise carried on the data signal by using the noise carried on the zero point as described above. In FIG. 12C, 'S' denotes a data signal component while 'N' denotes a remaining noise component which occurs due to interpolation estimation error and so forth.

In the access part (branch), noise removal by the above-mentioned zero point insertion is applied. As for the main line part, the signal shown in FIG. 12C after the noise removal is copied so as to provide the number of the identical signals same as the number of phases of a predetermined orthogonal sequence. Then, phase rotation is performed according to each phase of the orthogonal sequence, and, then, they are made to undergo frequency conversion so as to be of frequency bands obtained by division of the given transmission band by the number same as the number of phases of the orthogonal sequence. Accordingly, as shown in FIG. 12D, assuming that the number of phases of the orthogonal sequence is 4, phase rotation according to each phase of the orthogonal sequence is performed on the four identical signals (one original and three copies), and then, frequency conversion (or frequency modulation) is performed thereon into those of the division frequency bands, respectively.

In this case, assuming that the given transmission band is 12 through 24 MHz, this band is divided into four bands of 3 MHz each, and, then, the original signal and three copies thereof are assigned thereto, respectively. After that, phase rotation in conformity to each phase of the orthogonal sequence is performed. That is, as shown in FIG. 12D, noise components are placed on different positions with respect to phase through phase rotation of 0 degrees, 90 degrees, 180 degrees and 270 degrees, for example, respectively according to the phases of the orthogonal sequence.

With reference to FIGS. 13 through 16, orthogonal multiplex technique which is applied to the embodiment of the present invention will now be described.

FIG. 13 shows a case of employing a two-phase scheme (0, $\pi$). Assuming that two frequencies of w1 and w2 are used along frequency axis, effective orthogonal sequences are two sequences of (0, 0) and (0, $\pi$). Accordingly, by using the two sequences, it is possible to multiplex two systems, i.e., A system and B system, as shown.

First, as for the system A, as shown in FIG. 13, a signal is copied, and phase rotation of 0 degrees is given on each thereof, according to the above-mentioned first orthogonal sequence (0, 0), and then, they are modulated by the frequencies of w1 and w2, respectively. After that, these signals are transmitted together. On the reception end, these signals are demodulated by means of the corresponding carries w1 and w2. After that, these signals are added together after undergoing phase rotation of -0 degrees, which is reverse to the phase rotation on the transmission end. Accordingly, the identical signals are added, and, thus, the original signal having the magnitude doubled is obtained.

As for the system B, as shown in FIG. 13, a signal is copied, and phase rotation of 0 degrees and phrase rotation of 180 degrees, according to the second orthogonal sequence (0, $\pi$), are given on the respective ones thereof, and then, they are modulated by the frequencies of w1 and w2, respectively. After that, these signals are transmitted together. On the reception end, these signals are demodulated by means of the corresponding carries w1 and w2. After that, these signals are added together after undergoing phase rotation of -0 degrees and phase rotation of -180 degrees, which are reverse to those on the transmission end. Accordingly, the reception signals are returned to the signals same as those at the transmission end, and, as a result, the identical two signals are added. Thus, the original signal having the magnitude doubled is obtained.

On the other hand, as for the signals sent out from the system A and received by the system B, on the reception end of the system B, the phase rotation of -0 degrees and phase rotation of -180 degrees are given to also these signals coming from the system A, respectively, as mentioned above. Then, as each of the signals coming from the system A has merely the phase rotation of 0 degrees at the transmission end as mentioned above, the signal having undergone the phase rotations of -0 degrees and -180 degrees thus have the opposite phases. As a result, these signals are cancelled out.

Similarly, as for the signals sent out from the system B and received by the system A, on the reception end of the system A, the phase rotation of -0 degrees and phase rotation of -0 degrees are given to also these signals coming from the system B, respectively, as mentioned above. Then, as the signals coming from the system B have the phase rotations of 0 degrees and 180 degrees at the transmission end as mentioned above, the signal having undergone the phase rotations of -0 degrees and -0 degrees thus still have the opposite phases. As a result, these signals are cancelled out.

In other words, according to the orthogonal multiplex technology, as the signals on the system A and system B have 'orthogonal relationship', relevant one thereof is doubled while the other one thereof is cancelled out, when being added/integrated together after being demodulated (or reverse frequency shifted).

FIG. 14 illustrates another example of data transmission system to which orthogonal multiplexing technique is also applied. In this case, in comparison to the configuration shown in FIG. 13, the processing of (ROF + modulation) $\rightarrow$ (demodulation + ROF) is simplified into processing of (IFFT) $\rightarrow$ (FFT). Other than this the operation in the system is basically the same as that described with reference to FIG. 13.

FIG. 15 illustrates an orthogonal sequence according to another example of orthogonal multiplexing technology employing four phases per each orthogonal sequence. Also in this case, the basic principle is the same as in the case of employing two phases per each orthogonal sequence described above with reference to FIG. 13. FIG. 16 illustrates an orthogonal sequence according to another example of orthogonal multiplexing technology employing eight phases per each orthogonal sequence. Also in this case, the basic principle is the same as in the case of employing two phases per each orthogonal sequence described above with reference to FIG. 13.

In the embodiment of the present invention, the orthogonal sequence includes four phases as shown in FIG. 15. Basically, the given transmission band has a frequency band the integral number of times the basic transmission band, and assuming that the number of phases of each orthogonal sequence is 4, the given transmission band is divided by 4. Then, the signals after undergoing the respective phase rotations according to the phases of a predetermined orthogonal sequence are then assigned to the thus-obtained four division bands, respectively through corresponding frequency conversion/shift/modulation. For example, the possible patterns of phase rotation according to orthogonal sequences in case of employing four phases per orthogonal sequence are (0, 0, 0, 0), (0, 90, 180, 270), (0, 180, 0, 180), and (0, 270, 180, 90). In this case, for example, as on reception signals coming from respective braches of access part, these different orthogonal sequences are assigned, respectively, and, thus, corresponding phase rotations are performed thereon, respectively. Thus, these signals can be multiplexed together.

FIG. 12D shows a case where the given transmission band of 12 through 24 MHz is thus divided by 4, the relevant narrow-band signal is copied so as to assign the thus-obtained original and three copies of the signal to the thus-obtained four division bands, respectively. Then, predetermined one of the above-mentioned phase rotations, i.e. (0, 90, 180, 270) are applied to these four same narrow-band signals. As a result, as shown in FIG. 12D, the phase positions of noise components are also different according to these different phase rotations. The signals shown in FIG. 12D are then transmitted via the coaxial cable or optical fiber on the main line. The example shown in FIG. 12D is assumed as a set of signals prepared on an n-th branch of access part (n-th access branch), where n is an integer, from among a plurality of braches of access part, the signals thereon being to be multiplexed together. For the plurality of braches of access part, different orthogonal sequences are assigned, and, then, according to each sequence of the thus-assigned respective orthogonal sequences, corresponding phase rotations are applied on the respective ones of the set of identical signals having undergone noise removal described above. Then, thus-obtained respective sets of signals are multiplexed and transmitted via the main line. As the orthogonal sequences, as mentioned above, well-known Hadamard sequences, M-sequences, Gold sequences, Wavelet sequences, or the like may be applied.

FIGS. 17A through 17C illustrate the thus-obtained multiplexed signals and demodulation therefrom.

FIG. 17A shows an example of signal received after being transmitted via the main line as a first orthogonal sequence reception signal and a second orthogonal sequence reception signal which are multiplexed together. For example, as for each of the first and second braches of access part (first and second access branches), the narrow-band signal having undergone noise removal is copied for the four division bands. Then, different orthogonal sequences are assigned for the respective ones thereof, and phase rotations according to the assigned orthogonal sequence is applied on each thereof. After that, the respective sets of signals are multiplexed after frequency conversion/shift/modulation. In this case, the signals on the first access branch are those having undergone phase rotations as shown in FIG. 12D, and the same signals are also shown in FIG. 17A as the first orthogonal sequence reception signal. As for the second orthogonal sequence reception signal coming from the second access branch, for example, as shown in FIG. 17A, the set of signals having undergone the phase rotations of 180 degrees, 0 degrees, 270 degrees, and 90 degrees on the division bands, for example.

Accordingly, in demodulation of the reception signals in the main line system, as for the first orthogonal sequence reception signal, the reverse phase rotations are performed on the division bands according to the relevant orthogonal sequence, and, then, frequency inverse conversion/shift/demodulation is performed. After that, the thus-obtained signals are integrated/added together. In this case, in each division band, signals on the first and second access branches are mixed. However, as the inverse phase rotation patterns are different between the first and second access branches and, also, the first and second orthogonal reception signals have orthogonal relationship to one another, as mentioned above. Accordingly, in demodulation process of the first orthogonal sequence reception signal, the second orthogonal sequence reception signal is cancelled out automatically. In demodulation process of the second orthogonal sequence reception signal, the first orthogonal sequence reception signal is cancelled out automatically similarly.

FIG. 17B shows a signal after the demodulation of the second orthogonal sequence while FIG. 17C shows a signal after the demodulation of the first orthogonal sequence. In FIGS. 17A through 17C, N represents a remaining noise. Because the remaining noises have random phases, they are reduced in the demodulation process. As to the pattern of the inverse phase rotations thus performed on the reception end, necessary information should be sent from the transmission end by means of polling communications or the like.

FIG. 18 illustrates a branching distributing part according to the embodiment of the present invention, corresponding to the branching distributing part 6 in FIG. 3 or main line distributing branch amplifier 5. This part receives reception signals RS 1, RS 2 coming from the access branches 1, 2, ,respectively, includes a bandpass filter (BPF) 91, a demodulation part (DEM) 92, a lowpass filter (LPF) 93, an analogue-to-digital conversion part (A/D) 94, a timing interpolating unit (TIP) 95, a noise removal part 96, an interpolating unit (IPL) 97, an orthogonal sequence multiplication part 98, a lowpass filter (LPF) 99, a digital-to-analog conversion part (D/A) 100, a lowpass filter (LPF) 101, a modulation part (MOD) 102. an amplification and bandpass filter part (AMP & BPF) 103, a timing extraction and phase synchronization circuit (TIM1PLL) 104, a branch multiplexing part 105, a downlink distributing part 106, and a timing extraction phase synchronization circuit (TIM2PLL). This part outputs transmission signals SS1 and SS2 for the access branches 1 and 2, respectively.

This branching distribution part shown in FIG. 18 processes the reception signals RS1, RS2 from the access braches 1 and 2, multiplexes them by the branch multiplexing part 105 and then transmits the multiplex signal to the main line transmission path. Furthermore, similarly, such a branching distribution part as that shown in FIG. 18 may process reception signals from more access braches, multiplexes them similarly, and then transmits the multiplex signal to the main line transmission path. The configuration between the bandpass filter 91 and noise removal part 96 is similar to the configuration between the bandpass filter 31 and noise removal part 44 shown in FIG. 4A, and forms the configuration for the above-described noise removal operation by using zero point insertion described above.

The interpolating part 97 and orthogonal sequence multiplication part 98 may be changed in their connection order. Furthermore, the interpolating part 97 acts to remove zero points included in the signal having noise removed by the noise removal part 96. The orthogonal sequence multiplication part 96 copies the signal from the interpolating unit 97 in the number same as that of the division bands of the given transmission band as shown in FIGS. 12D and 17A, performs phase rotations according to the orthogonal sequence, and performs frequency conversion/shift/modulation. In this case, the orthogonal sequences are different between the first and second access braches in the orthogonal sequence multiplication part 96.

Then, the signal is input to the digital-to-analog conversion part 100 through the lowpass filter 99, and, then, the thus-obtained analog signal is made to pass through the lowpass filter 101. Then, the signal is input to the modulation part 102, QAM operation is performed thereon, and then, the signal is processed by the amplifier and bandpass filter 103. Then, the signals coming from the respective first and second access braches and thus having undergone phase rotations according to the different orthogonal sequences are multiplexed by the branch multiplexing part 105, Then, the multiplex signal is sent to the coaxial cable, and is transmitted to the head end. On the other hand, the reception signals coming from the head end is distributed for the respective first and second access branches by the downlink distribution part 106.

As for input of timing signal into the timing interpolating part 95 by the timing extraction phase synchronization circuit 104, a timing signal is extracted from the signal coming from the head end by the timing extraction phase synchronization circuit 107, and, then, is input to the timing extraction phase synchronization circuitry 104. Thereby, the timing extraction phase synchronization circuit 104 on each access branch can be made simpler, and, also, timing synchronization with the head end can be made easier.

FIG. 19 illustrates the head end according to the embodiment of the present invention, and, includes a bandpass filter (BPF) 111, a demodulation part (DEM) 112, a lowpass filter (LPF) 113, an analogue-to-digital conversion part (A/D) 114, a frequency shifting part 115, a roll-off filter (ROF) 116, an orthogonal sequence multiplication part 117, an addition part 118, a QAM modem receiving part 119, and a transmission connection part 120 including a LAN to be connected to the center or the like.

The multiplex reception signal sent from the above-described branch multiplexing part of the branching and distributing part shown in FIG. 18 via the coaxial cable or optical fiber is made to undergo demodulation through the demodulation part 112 after undergoing removal of uselessness bands by the bandpass filter 111. Then, after passing through the lowpass filter 113, the signal is input to the analogue-to-digital conversion part 111, and thus, it is converted to a digital signal. Then, the plurality of carrier frequencies are shifted into the reference frequency by the frequency shifting part 115. Then, the signal is made to pass through the roll-off filter 116, and is input to the orthogonal sequence multiplication part 117, where the inverse phase rotations are performed according to the orthogonal sequence so as to return the phases of the signals, and the thus-obtained signals are added together by the addition part 118.

Thereby, by performing inverse phase rotation according to the orthogonal sequence assigned for the first access branch, the signals once spread along frequency axis are made to return to the same frequency. Then, by having undergone integration/addition thereof, the signal coming from the first access branch is restored, while the signal coming from the second access branch is cancelled out, automatically. Similarly, by performing inverse phase rotation according to the orthogonal sequence assigned for the second access branch, the signals once spread along frequency axis are made to return to the same frequency. Then, by having undergone integration/addition thereof, the signal coming from the first access branch is cancelled out, while the signal coming from the second access branch is restored, automatically. Then, the resultant signal is received in the QAM modem receiving part 119, it is processed there, and then, is sent to the center or the like through the transmission connecting part 120.

As the configuration between the bandpass filter 111 and roll-off filter 116 may have the same configuration regardless of particular access branch, all or part thereof may be made as a common configuration, without regard to the number of access branches. In case of providing a configuration which can perform processing for more access branches, corresponding number of series of parts each at least including the orthogonal sequence multiplication part 117 should be provided. In case where a different frequency band is used for each access branch, the bandpass filter 111 should be configured correspondingly for each access branch.

FIG. 20 illustrates a transmission part 121 in detail such as that in the above-described branching and distribution part and a reception part 131 in detail such as that in the above-described head end, in the main line system according to the embodiment of the present invention. The transmission part 121 receives basic transmission band baseband signals 122 which are the original and copies of the above-mentioned narrow-band signal, and includes phase rotation parts 123-1 through 123-4, roll-off filter and modulation parts 124-1 through 124-4, and a multiplexing addition part 125. The transmission part 131 includes demodulation and roll-off filter parts 132-1 through 132-4, phase inverse rotation parts 133-1 through 133-4, and an addition part 134.

In the transmission part 121, the basic transmission band baseband signals 122 undergo phase rotations according to the orthogonal sequence, as described above, by the respective phase rotation parts 123-1 through 123-4. For example, assuming that the number of phases of the orthogonal sequence is 4, as mentioned above, the four basic transmission band baseband signals 122 are simultaneously input to the phase rotation parts 123-1 through 123-4. Then, the phase rotation parts 123-1 through 123-4 perform phase rotations of 0 degrees, 90 degrees, 180 degrees and 270 degrees, respectively.

Then, waveform shaping is done in the roll-off filter and modulation parts 124-1 through 124-4, frequency conversion/shift/modulation is done for each division band, and, then, multiplexing thereof is done in the multiplication addition part 125. As for each of the other access branches, similar operation is performed on each thereof according to the respective one of the given orthogonal sequences, as mentioned above, and, after that, all of the resultant signals are multiplexed, as described above with reference to FIG. 18. Then, the multiplexed signal is sent to the reception part 131 via the transmission path 126 of the main line such as coaxial cable or optical fiber.

In the receiving part 131, demodulation is performed by the demodulation and roll-off filter parts 132-1 through 132-4, inverse phase rotations are performed so as to return the phase rotation angles by the phase rotation parts 133-1 to 133-4. Then, addition is performed by the addition part 134, and, thus, the original basic transmission band baseband signal 135 is obtained.

The above-mentioned multiplex addition part 125 may be omitted, and thus, a system may be configured in which the roll-off filter and modulation parts 124-1 through 124-4 in the transmission part 121 are directly connected with the demodulation and roll-off filter parts 132-1 through 132-4 in the reception part 131, respectively. Then, the baseband signal is copied for the phases of the orthogonal sequence, phase rotations according to the orthogonal sequence are performed on the respective signals (original and copies), and, then, without performing frequency conversion/modulation, and without performing multiplexing, these signals may be directly sent to the reception part 131 and to undergo there inverse phase rotation. Alternatively, the baseband signal is copied for the phases of the orthogonal sequence, phase rotations according to the orthogonal sequence are performed on the respective signals (original and copies), and, then, after performing frequency conversion/modulation, and without performing multiplexing, these signals may be directly sent to the reception part 131 to undergo frequency inverse conversion/demodulation and then inverse phase rotations there.

FIG. 21 illustrates a configuration for phase rotation and frequency conversion/shift/modulation, same as that shown in FIG. 13, and, includes a phase rotation part 151, a frequency shift part 152, multipliers 153, 155, and a roll-off filter (ROF) 154. A signal $Ae^{j(\omega t+\theta)}$ input to the phase rotation part 151 is multiplied with a signal $e^{j\theta 1}$ for providing a phase rotation according to a phase of a predetermined orthogonal sequence by the multiplier 153. Thereby the phase rotation of θ1 is provided. Thus, the input signal becomes $Ae^{+j(\omega t+\theta+\theta 1)}$. Then, it is input to the frequency shift part 152, and, then, waveform shaping is performed by the roll-off filter 154. In this case, assuming that the number of phases of orthogonal sequences is four, and signal copy is performed so as to provide four identical signals $A^{j(\omega t+\theta)}$. Then, for a certain access branch, the phase rotation angles θ1 through θ4 are made according to the predetermined orthogonal sequence, i.e., for example, 0 degrees, 90 degrees, 180 degrees and 270 degrees. For another access branch, they may be according to another orthogonal sequence, i.e., for example, 0 degrees, 180 degrees, 0 degrees, and 180 degrees.

Then, by the multiplier 155, $e^{+j\omega 0t}$ is multiplied. Thereby, $Re^{+j(\omega t+\omega 0t+\theta+\theta 1)}$ is obtained. Thus, after the phase rotation of θ1 is provided, it is changed in frequency or frequency-modulated into ωt + ω0t. Similarly, returning to FIG. 20, in the transmission part 121, the phase rotation parts 123-1 through 123-4 may have the phase rotation angles of θ1 through θ4 while the roll-off filter and modulation parts 124-1 through 124-4 may have the frequency shift/frequency modulation by ω0t through ω3t for the respective division bands.

FIG. 22 illustrates a configuration for frequency shift/demodulation and phase inverse rotating, and includes a frequency shift part 162, a phase inverse rotation part 162, multipliers 163, 165, and a roll-off filter (ROF) 164. In the frequency shift part 161, the reception signal $Re^{+j(\omega t+\omega 0t+\theta+\theta 1)}$ is multiplied with a signal $e^{-j\omega 0t}$ for frequency inverse shift. Thereby, the reception signal becomes $Re^{+j(\omega t+\theta+\theta 1)}$. Then, waveform shaping is performed by the roll-off filter 164, and, then, phase inverse rotation according to the phase of the orthogonal sequence is performed. Specifically, by the multiplier 165, the signal is multiplied with $e^{-j\theta 1}$ and, thus, the signal $Ae^{+j(\omega t+\theta)}$ is restored. In this case, the phases of the signals carried by the division bands are the same while the phase of the noises are opposite, the noise components are effectively cancelled out while the signal components are added together, as described above.

FIG. 23 illustrates an embodiment of the present invention which applies an OFDM (Orthogonal Frequency Divislon Multiplexing) formula, corresponding to the configuration shown in FIG. 4A. This transmission system includes a transmission part which includes a code conversion part 171 including a scrambler SCR, serial/parallel conversion S/P, gray code/natural code conversion (G/N), and finite sum arithmetic, a signal point generation part 172, an inverse fast Fourier transform part (IFFT) 173, a guard time addition part 174, a zero point insertion part 175, a roll-off filter (ROF) 176, a digital-to-analog conversion part (D/A) 177, a lowpass filter (LPF) 178, a modulation part {MOD) 179, and a bandpass filter (BPF) 180.

The transmission system also includes a reception part which includes a bandpass filter (BPF) 181, a demodulation part (DEM) 182, a lowpass filter (LPF) 183, an analogue-to-digital conversion part (A/D) 184, a roll-off filter (ROF) 185, a noise removal part 186, a guard time removing part 187, a fast Fourier transform part (FFT) 188, an equalizing and carrier automatic phase control part (EQL CAPC) 189, a determination part (DEC) 191, and a code conversion part 192 including differential arithmetic, natural code/gray code conversion (N/G), parallel-to-serial conversion (P/S), and descrambler DSCR.

The transmission system further includes a synchronization processing part 193 which performs timing synchronization, sub-frame synchronization, master-frame synchronization, and provides a clock signal and a timing signal to each part. This part 193 corresponds to a configuration including the transmission clock generating part (TX-CLK) 28, timing extraction part (TIM) 36, phase synchronization oscillation part (PLLVCXO) 37, and reception clock generating part (RX-CLK) 38 shown in FIG. 4A.

In the transmission part, the transmission signal SD is input, and then, the inverse fast Fourier transform part 173 has parallel data indicating modulation points input thereby from the signal point generation part 172. There, the code conversion part 21, converter 22 and signal point generating part 23 shown in FIG. 4A correspond to the code conversion part 171 and signal point generating part 172. Thus, the reception data is converted into data of plural number carrier frequencies by inverse Fourier transform operation. In other words, the thus-obtained data is data according to OFDM formula. A guard time is then added by the guard time addition part 174, zero points for noise removal are inserted by the zero point insertion part 175, and waveform shaping is done by the roll-off filter 176. Then, the signal is converted into an analog signal by the digital-to-analog conversion part 177, made to pass through the lowpass filter 178, and then is input to the modulation part 179, modulation in conformity to OFDM formula is performed there, useless band components are removed by the bandpass filter 180, and thus, the thus-obtained signal is sent to the transmission line TX-line.

In the reception part, the reception signal RD is made to pass through the bandpass filter 181, then, is input into the demodulation part 182, and the signal is demodulated there. Then, the signal is made to pass through the lowpass filter 183, is input to the analogue-to-digital conversion part 184, and it is converted into a digital signal there. Then, the signal is made to pass through the roll-off filter 185, and is input to the noise removal part 186. This noise removal part 186 is basically same as the noise removal part 44 shown in FIG. 4A, performs noise removal according to the scheme described above with reference to FIG. 8 according to the present invention. As the OFDM formula uses a plurality of carrier frequencies, the noise removal is performed on each carrier frequency.

From the signal which has undergone the noise removal in the noise removal part 186, the guard time is removed by the guard time removing part 187, Fourier transform is then performed by the fast Fourier transform part 188, and equalization processing and phase adjustment are done by the equalization and carrier automatic phase control part 189. Thus, the signal is returned to the state in the transmission part before undergoing the inverse Fourier transform by the inverse fast Fourier transform part 173. Then, the data is determined by the determination part 191, and differential processing, natural code/gray code transform processing, parallel-to-serial conversion processing, descrambling processing are performed by the converter 192. Thus, the reception data RD is obtained.

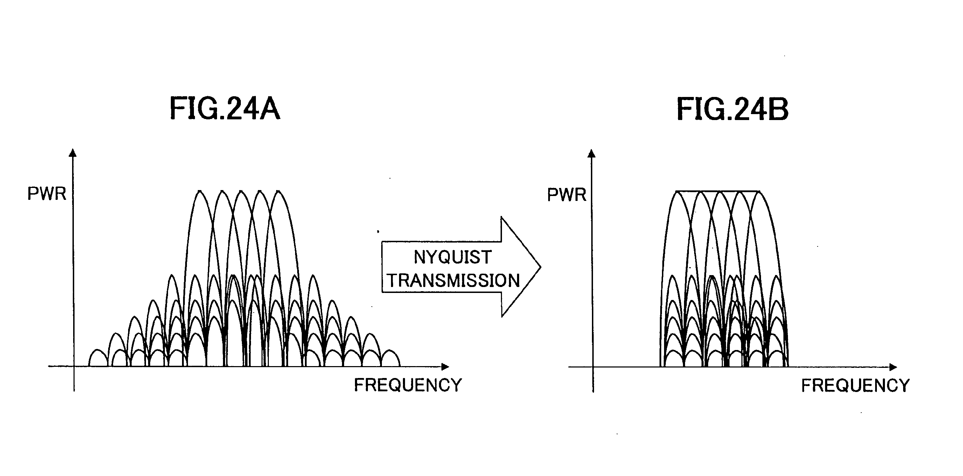

FIGS. 24A and 24B illustrate a transmission band, in the embodiment shown in FIG. 23, or the like. In each thereof, the horizontal scale represents frequency while vertical scale represents power PWR. As shown in FIG. 24A, useless band of each channel in OFDM formula or DMT (Discrete Multitone) formula decreases in power according to a curve of sinx/x. Then, by using the roll-of filter 176 in the transmission part as mentioned above shown in FIG. 23, the waveform shaping removing unnecessary band is performed, and, therefore, Nyquist transmission can be applied.

The present invention may be embodied in various ways other than the above-described embodiments. For example, not only the CATV system but also the present invention can be applied to any other similar system. For example, the present invention may also be applied to various types of modems to be used for modulation/demodulation of information to be carried by various types of information carrying media, i.e., an optical disk, radio communications, a barcode, etc.

According to the present invention, in a main line system, a plurality of different transmission bands are used, each band is divided into division bands according to the number of phases of a predetermined orthogonal sequence, and a narrow-band signal is made to undergo phase rotation and frequency shift/frequency modulation according to each phase of the predetermined orthogonal sequence. Thereby, even in a case where the number of phases of orthogonal sequence is small, it is possible to transmit signals from many access branches via a transmission path of the main line system.

Further, the present invention is not limited to the above-described embodiments, and variations and modifications may be made without departing from the scope of the present invention.

The present application is based on Japanese priority application No. 2002-023325, filed on July 31, 2002, the entire contents of which are hereby incorporated by reference.

## Claims

**1.** A data transmission system comprising:

a transmission part (5 or 6) producing a copy of a given narrow-band signal so as to obtain a number of identical signals according to a predetermined orthogonal sequence, and performing respective phase rotations on the thus-obtained signals according to the predetermined orthogonal sequence; and

a reception part (5 or 6) performing reverse phase rotation on the reception signals according to the predetermined orthogonal sequence, and then performing mutual addition thereon so as to restore the narrow-band signal.

**2.** The data transmission system as claimed in claim 1, wherein:

said transmission part further performs frequency conversion on each of the signals having undergone the phase rotations into predetermined division frequency bands, respectively; and

said reception part further performs reverse frequency conversion so as to return the frequency band of each signal into the original frequency band before they are added together.

3. The data transmission system as claimed in claim 1, further comprising a plurality of access branches, each of which comprises a transmission part (8 or 6) and a reception part (8 or 6), wherein:

   said transmission part of the access branch inserts zero points with predetermined intervals of signal points; and
   said reception part of the access branch extracts the inserted zero points based on a predetermined frequency of the zero point insertion, and, by using noise components carried on the thus-extracted zero points, cancels noise components carried on the signal points.

4. The data transmission system as claimed in claim 1, further comprising a plurality of access branches, each of which comprises a transmission part (8 or 6) and a reception part (8 or 6), wherein:

   said transmission part of the access branch generates signal points according to given transmission data, distributes the signal points to predetermined carries and then multiplexes the signal points, inserts zero points with predetermined intervals of the multiplexed signal points, performs orthogonal amplitude modulation on the thus-obtained signal, and transmits the modulated signal;
   said reception part of the access branch performs orthogonal amplitude demodulation, and extracts the inserted zero points based on a predetermined frequency of the zero point insertion, and, by using noise components carried on the thus-extracted zero points, cancels noise components carried on the signal points.

5. A data transmission apparatus comprising:

   a part (122) producing a copy of a given narrowband signal so as to obtain a number of same signals according to predetermined orthogonal sequence; and
   part (123-1 through 123-4) performing respective phase rotations on the thus-obtained signals according to the orthogonal sequence

6. The data transmission apparatus as claimed in claim 5, further comprising a part (124-1 through 124-4) performing frequency conversion on each of the signals having undergone the phase rotations into predetermined division frequency bands, respectively.

7. The data transmission apparatus as claimed in claim 5, comprising:

   a part (23) generating signal points according to given transmission data; and
   a part (29) inserting zero points with predetermined intervals of the multiplexed signal points.

8. A data transmission apparatus as claimed in claim 5, comprising:

   a part (172) generating signal points according to given transmission- data;
   a part (173) distributing the signal points to predetermined carries;
   a part (173) multiplexing the signal points;
   a part (175) inserting zero points with predetermined intervals of the multiplexed signal points;
   a part (179) performing orthogonal amplitude modulation on the thus-obtained signal; and
   a part (180) transmitting the modulated signal.

9. A data transmission apparatus comprising:

   a part (133-1 through 133-4) performing reverse phase rotation on a reception signal according to a predetermined orthogonal sequence; and
   a part (134) performing mutual addition thereon so as to restore an original narrow-band signal.

10. The data transmission apparatus as claimed in claim 9, further comprising a part (132-1 through 132-4) performing reverse frequency conversion so as to return the frequency band of each signal into the original frequency band before they are added together by said part performing mutual addition.

11. The data transmission apparatus as claimed in clam 9, comprising:

   a part (44) extracting zero points inserted in the signal at a transmission end, based on a predetermined frequency of zero point insertion;
   a part (44), by using noise components carried on the thus-extracted zero points, canceling noise components carried on signal points included in the received signal.

12. The data transmission apparatus as claimed in clam 9, comprising:

   a part (182) performing orthogonal amplitude demodulation on a received signal;
   a part (186) extracting zero points inserted in the signal at a transmission end, based on a predetermined frequency of zero point insertion;
   a part (186), by using noise components carried on the thus-extracted zero points, canceling noise components carried on signal points included in the received signal.

**13.** A data transmission method comprising the steps of:

a) producing a copy of a given narrow-band signal so as to obtain a number of identical signals according to a predetermined orthogonal sequence; and
b) performing respective phase rotations on the thus-obtained signals according to the present invention orthogonal sequence.

**14.** A data transmission method comprising the steps of:

a) performing reverse phase rotation on reception signals according to a predetermined orthogonal sequence; and
b) performing mutual addition of the signals obtained through said step a) so as to restore the narrow-band signal.

**15.** A data transmission method comprising the steps of:

a) producing a copy of a given narrow-band signal so as to obtain a number of identical signals according to a predetermined orthogonal sequence;
b) performing respective phase rotations on the thus-obtained signals according to the present invention orthogonal sequence;
c) performing reverse phase rotation on reception signals according to the predetermined orthogonal sequence; and
d) performing mutual addition of the signals obtained through said step c) so as to restore the narrow-band signal.

**16.** The data transmission method as claimed in claim 15, further comprising the steps of:

e) performing frequency conversion on each of the signals having undergone the phase rotations in said step b) into predetermined division frequency bands, respectively; and
f) performing reverse frequency conversion so as to return the frequency band of each signal into the original frequency band before they undergo reverse phase rotation in said step c).

**17.** The data transmission method a claimed in claim 15, further comprising the steps, performed on plurality of access branches connected with said transmission part, of

e) inserting zero points with predetermined intervals of signal points;
f) extracting the inserted zero points based on a predetermined frequency of the zero point insertion, and, by using noise components carried on the thus-extracted zero points through data transmission, canceling noise components carried on the signal points through the data transmission; and
g) transmitting the signal thus having undergone noise removal in said step f) to said transmission part.

**18.** The data transmission method as claimed in claim 15, further comprising the steps, performed on a plurality of access branches connected with said transmission part, of:

e) generating signal points according to given transmission data;
f) distributing the signal points to predetermined carries and then multiplexing the signal points;
g) inserting zero points with predetermined intervals of the multiplexed signal points;
h) performing orthogonal amplitude modulation on the thus-obtained signal;
i) transmitting the modulated signal;
j) receiving the transmitted signal;
k) performing orthogonal amplitude demodulation on the received signal;
l) extracting the inserted zero points based on a predetermined frequency of the zero point insertion;
m), by using noise components carried on the thus-extracted zero points, canceling noise components carried on the signal points;
n) transmitting the thus-noise-cancelled signal into said transmission part.

FIG.1

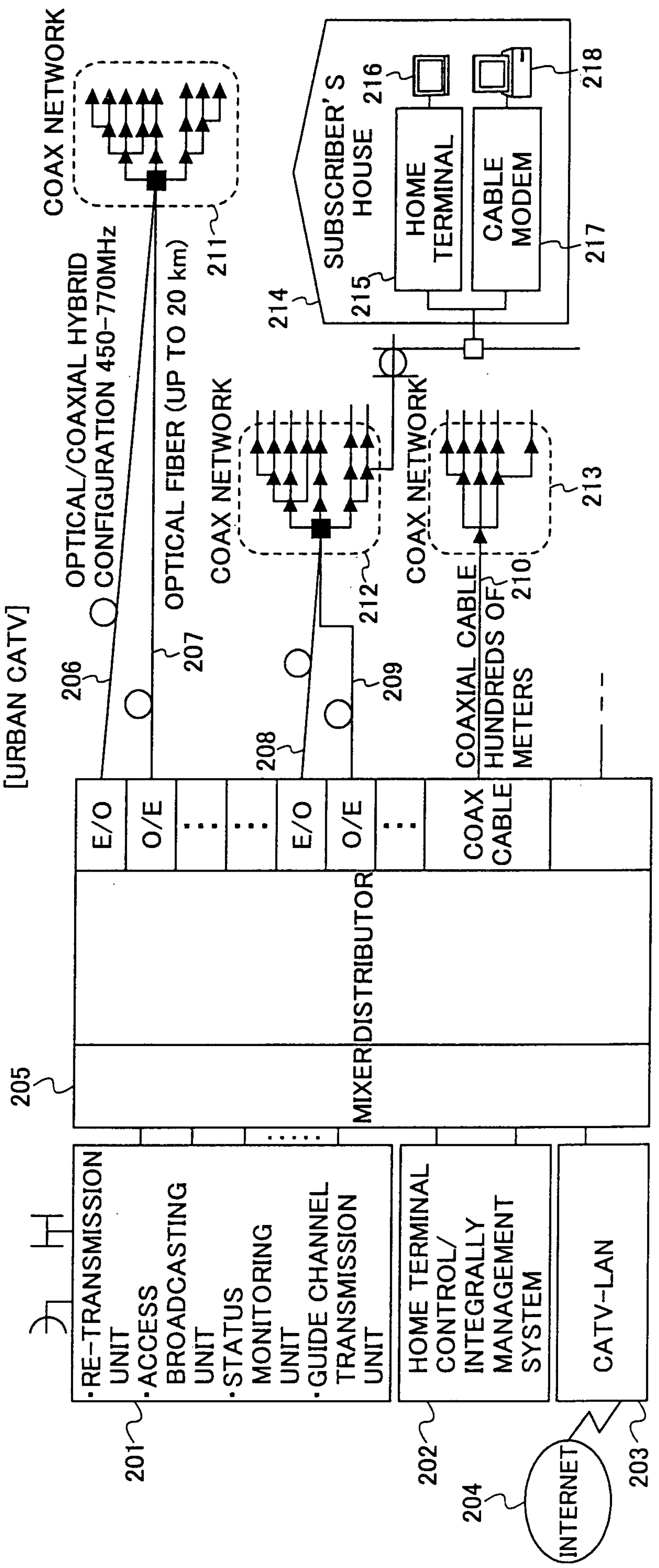
[URBAN CATV]
•RE-TRANSMISSION UNIT
•ACCESS BROADCASTING UNIT
•STATUS MONITORING UNIT
•GUIDE CHANNEL TRANSMISSION UNIT
201
HOME TERMINAL CONTROL/ INTEGRALLY MANAGEMENT SYSTEM
202
CATV-LAN
203
INTERNET
204
205
MIXER
DISTRIBUTOR
E/O
O/E
E/O
O/E
COAX CABLE
206
207
208
209
OPTICAL/COAXIAL HYBRID CONFIGURATION 450-770MHz
OPTICAL FIBER (UP TO 20 km)
COAXIAL CABLE HUNDREDS OF METERS
210
COAX NETWORK
211
COAX NETWORK
212
COAX NETWORK
213
SUBSCRIBER'S HOUSE
214
HOME TERMINAL
215
216
CABLE MODEM
217
218

FIG.2

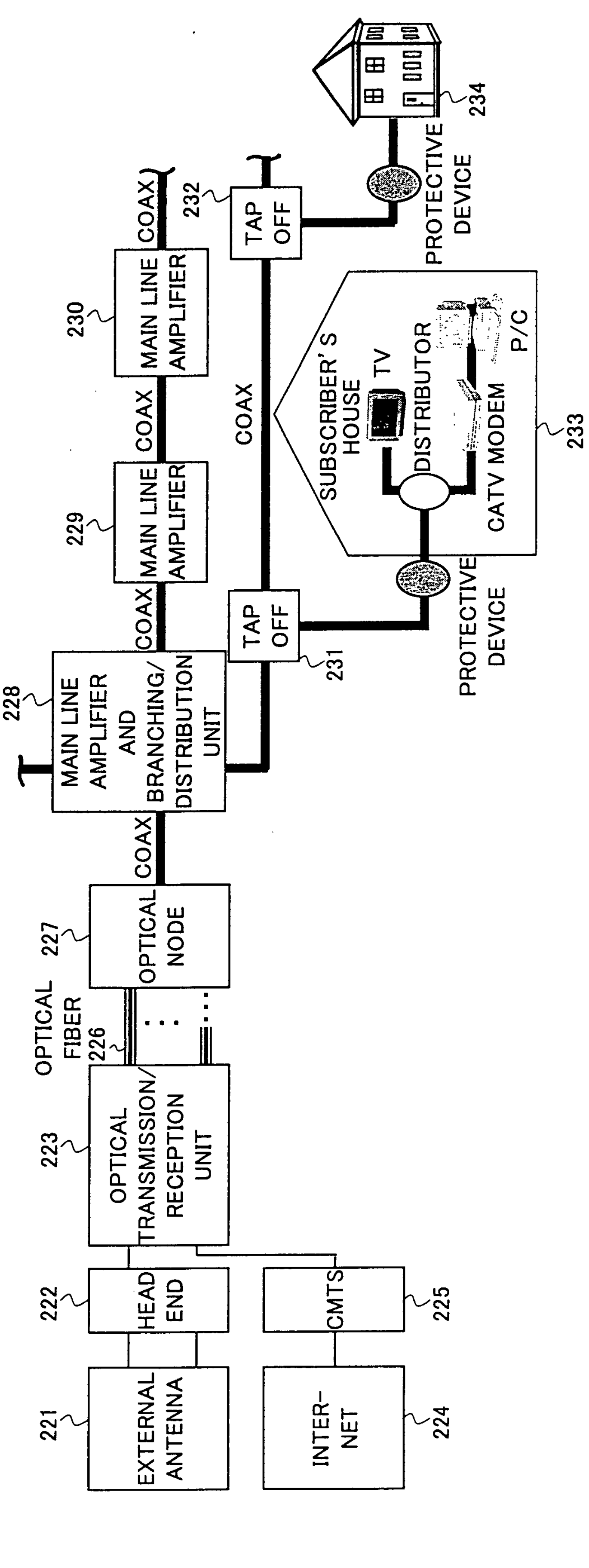
EXTERNAL ANTENNA
221
HEAD END
222
OPTICAL TRANSMISSION/ RECEPTION UNIT
223
INTER-NET
224
CMTS
225
OPTICAL FIBER
226
OPTICAL NODE
227
COAX
MAIN LINE AMPLIFIER AND BRANCHING/ DISTRIBUTION UNIT
228
COAX
MAIN LINE AMPLIFIER
229
COAX
MAIN LINE AMPLIFIER
230
COAX
TAP OFF
231
COAX
TAP OFF
232
PROTECTIVE DEVICE
SUBSCRIBER'S HOUSE
TV
DISTRIBUTOR
CATV MODEM
P/C
233
PROTECTIVE DEVICE
234

FIG.3

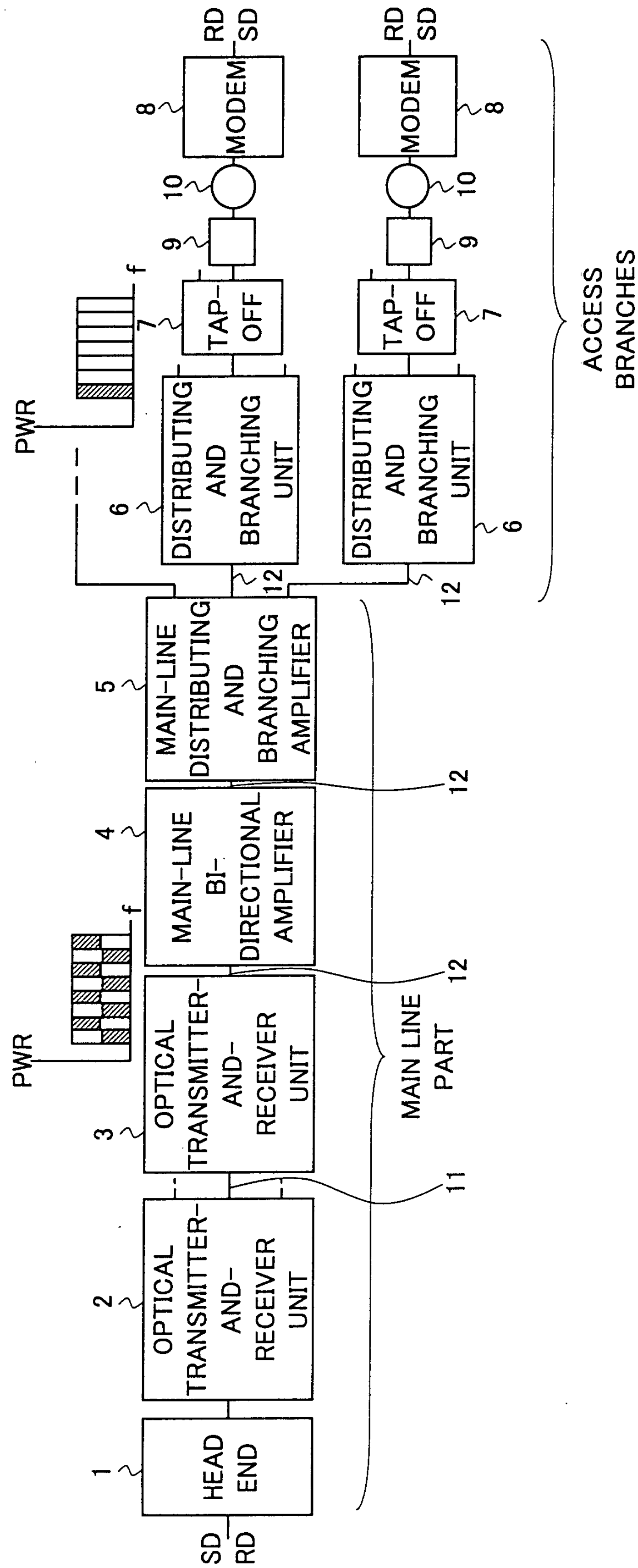
SD
RD
1
HEAD END
2
OPTICAL TRANSMITTER-AND-RECEIVER UNIT
11
3
OPTICAL TRANSMITTER-AND-RECEIVER UNIT
PWR
f
12
4
MAIN-LINE BI-DIRECTIONAL AMPLIFIER
12
5
MAIN-LINE DISTRIBUTING AND BRANCHING AMPLIFIER
MAIN LINE PART
12
6
DISTRIBUTING AND BRANCHING UNIT
PWR
f
7
TAP-OFF
9
10
8
MODEM
RD
SD
12
6
DISTRIBUTING AND BRANCHING UNIT
7
TAP-OFF
9
10
8
MODEM
RD
SD
ACCESS BRANCHES

FIG.4A

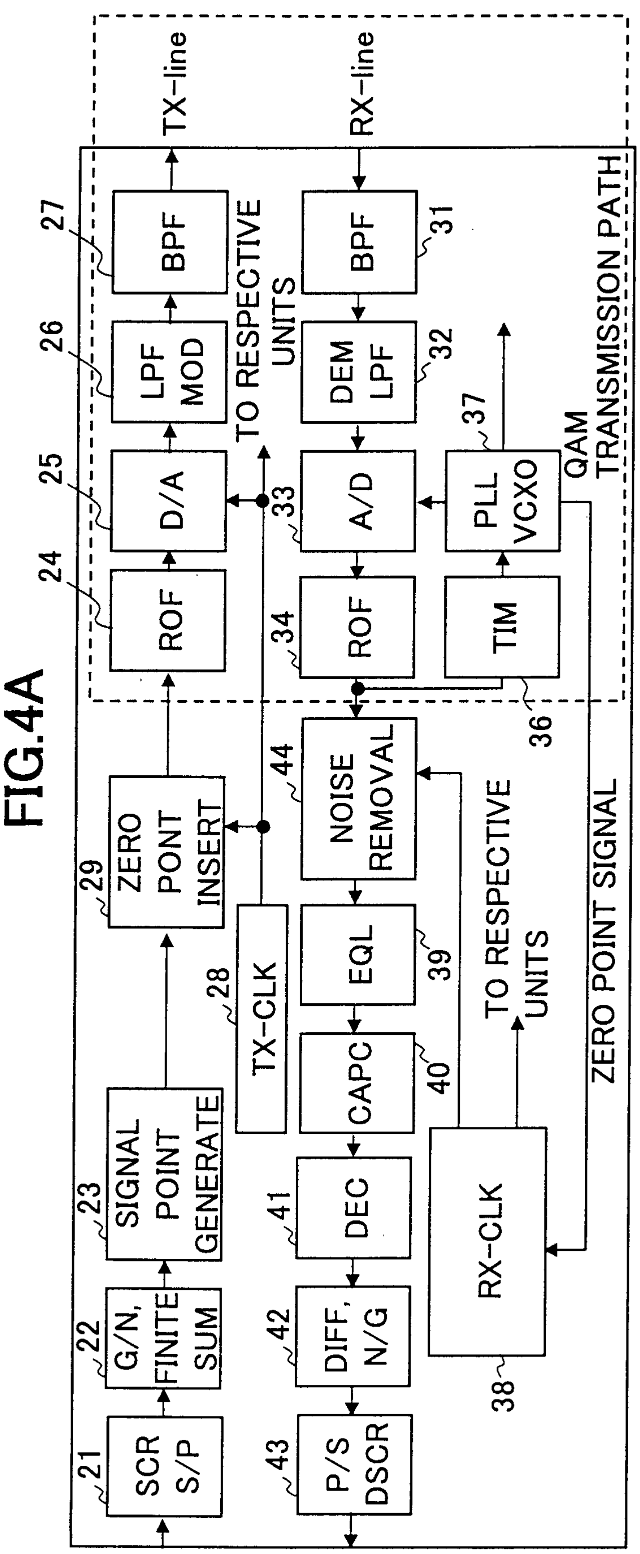
SD
RD
SCR S/P
G/N, FINITE SUM
SIGNAL POINT GENERATE
ZERO PONT INSERT
ROF
D/A
LPF MOD
BPF
TX-line
RX-line
BPF
DEM LPF
A/D
ROF
PLL VCXO
TIM
TO RESPECTIVE UNITS
QAM TRANSMISSION PATH
TX-CLK
NOISE REMOVAL
EQL
CAPC
DEC
DIFF, N/G
P/S DSCR
RX-CLK
TO RESPECTIVE UNITS
ZERO POINT SIGNAL
21
22
23
24
25
26
27
28
29
31
32
33
34
36
37
38
39
40
41
42
43
44

FIG.4B

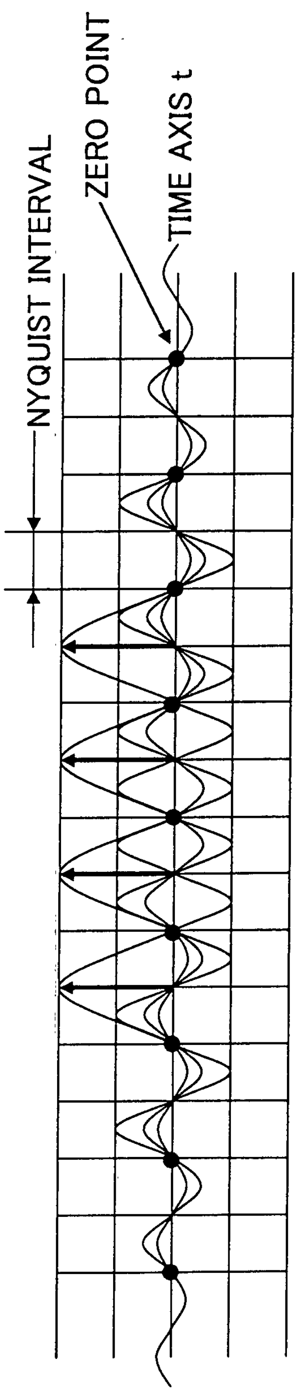
NYQUIST INTERVAL
ZERO POINT
TIME AXIS t

FIG.5

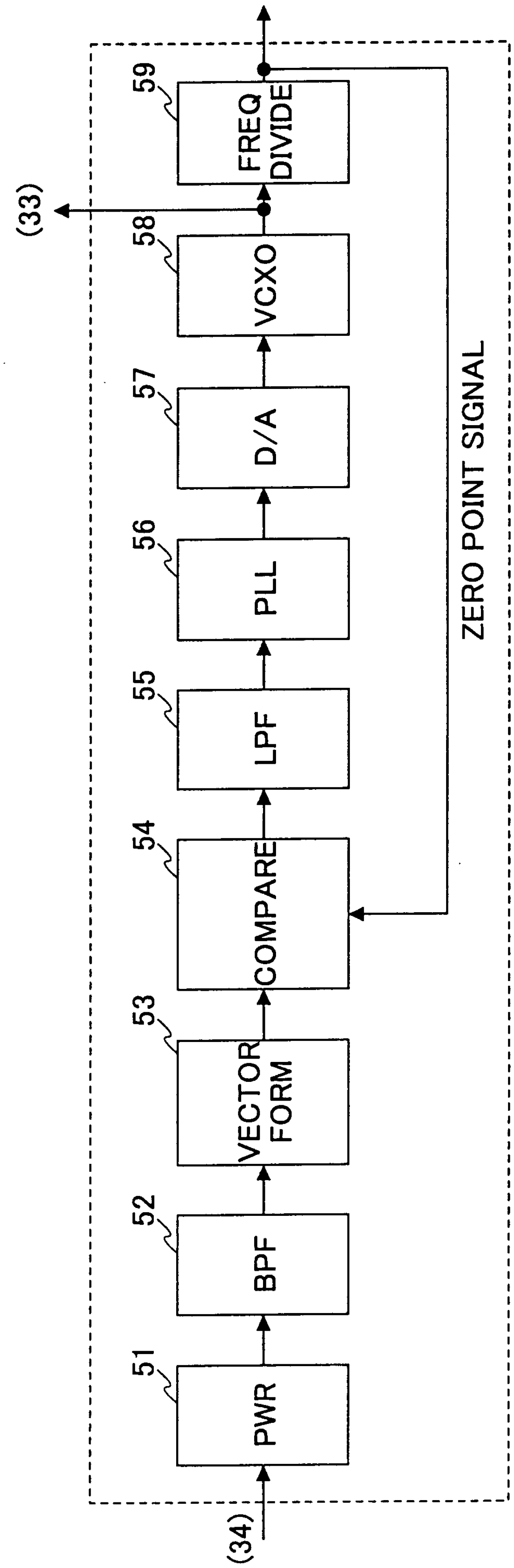
(34)
51
PWR
52
BPF
53
VECTOR FORM
54
COMPARE
55
LPF
56
PLL
57
D/A
58
VCXO
(33)
59
FREQ DIVIDE
ZERO POINT SIGNAL

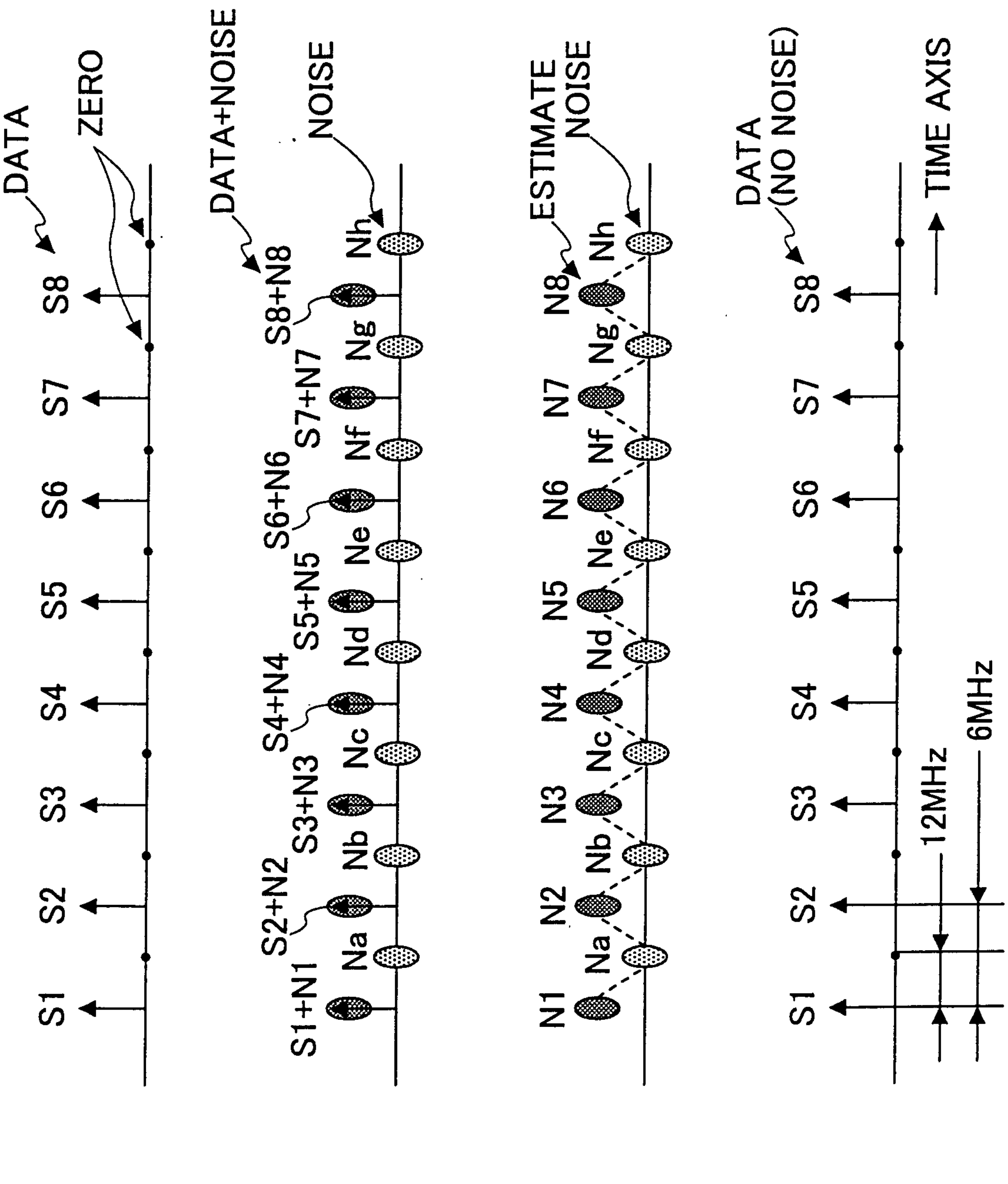


FIG.6A

FIG.6B

FIG.6C

FIG.6D

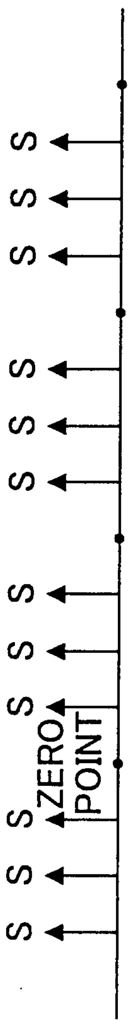


FIG.7A

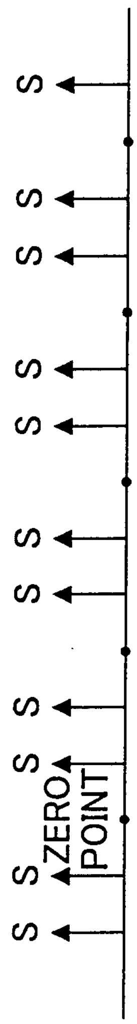


FIG.7B

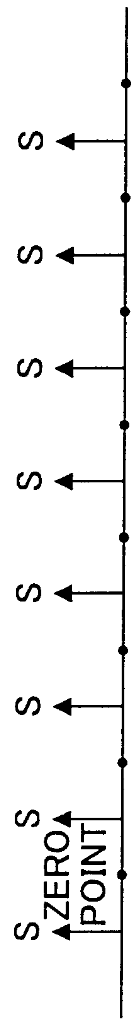


FIG.7C

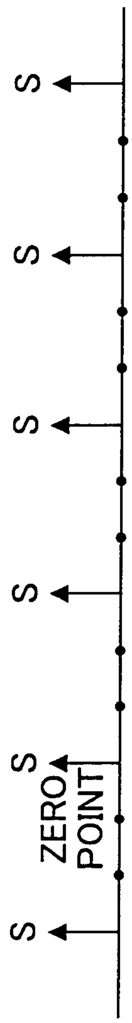


FIG.7D

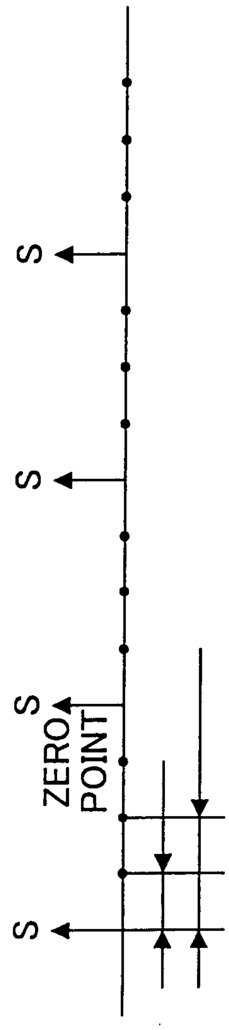


FIG.7E

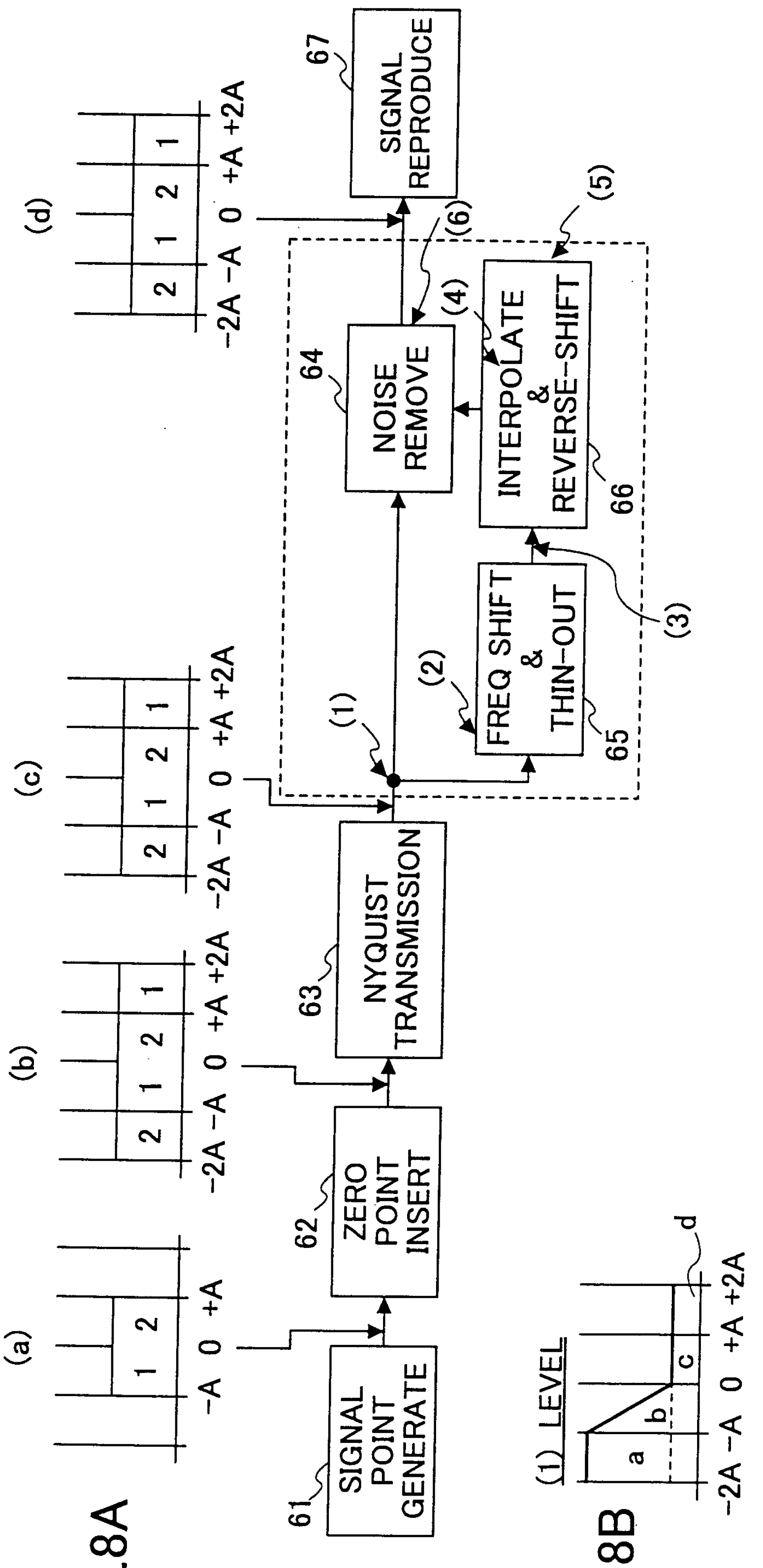
(a)
-A 0 +A
1 2
(b)
-2A -A 0 +A +2A
2 1 2 1
(c)
-2A -A 0 +A +2A
2 1 2 1
(d)
-2A -A 0 +A +2A
2 1 2 1
61
SIGNAL POINT GENERATE
62
ZERO POINT INSERT
63
NYQUIST TRANSMISSION
(1)
(2)
FREQ SHIFT & THIN-OUT
65
(3)
64
NOISE REMOVE
(4)
INTERPOLATE & REVERSE-SHIFT
66
(5)
(6)
67
SIGNAL REPRODUCE
(1) LEVEL
a b c d
-2A -A 0 +A +2A

FIG.8A

FIG.8B

FIG.8C

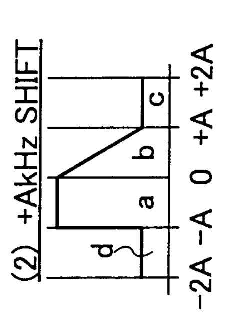


FIG.8D

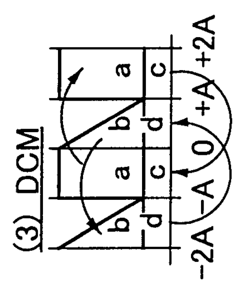


FIG.8E

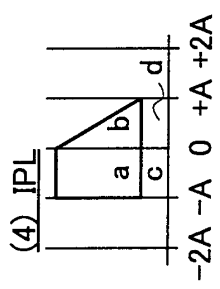


FIG.8F

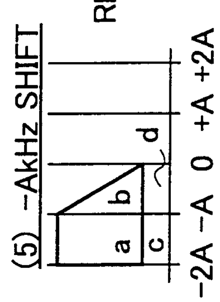


FIG.8G

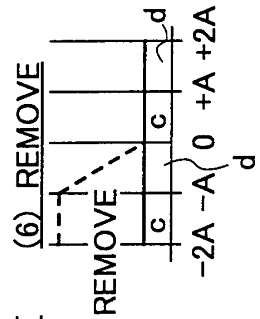

FIG.9

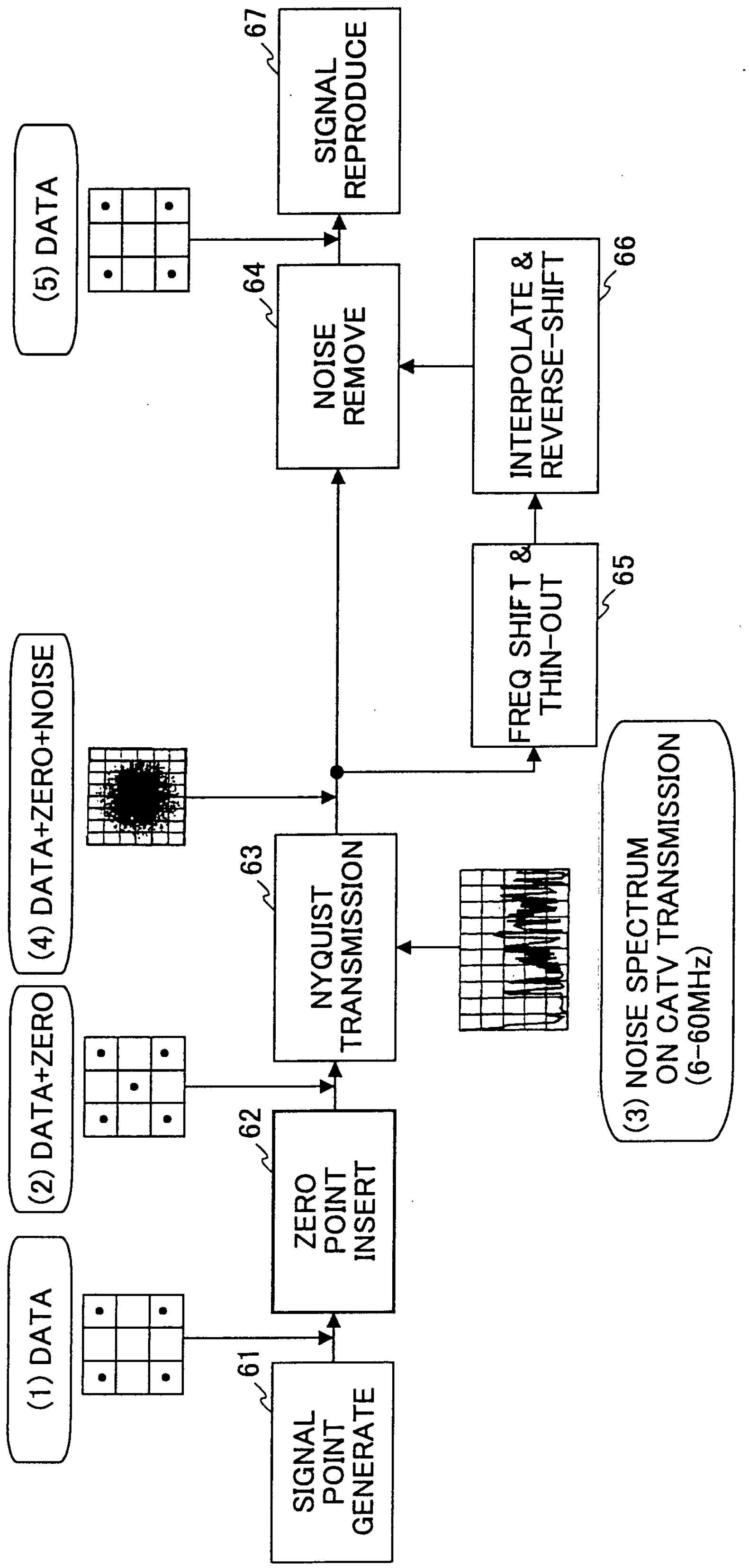
(1) DATA
(2) DATA+ZERO
(3) NOISE SPECTRUM ON CATV TRANSMISSION (6-60MHz)
(4) DATA+ZERO+NOISE
(5) DATA
SIGNAL POINT GENERATE
61
ZERO POINT INSERT
62
NYQUIST TRANSMISSION
63
NOISE REMOVE
64
FREQ SHIFT & THIN-OUT
65
INTERPOLATE & REVERSE-SHIFT
66
SIGNAL REPRODUCE
67

FIG.10

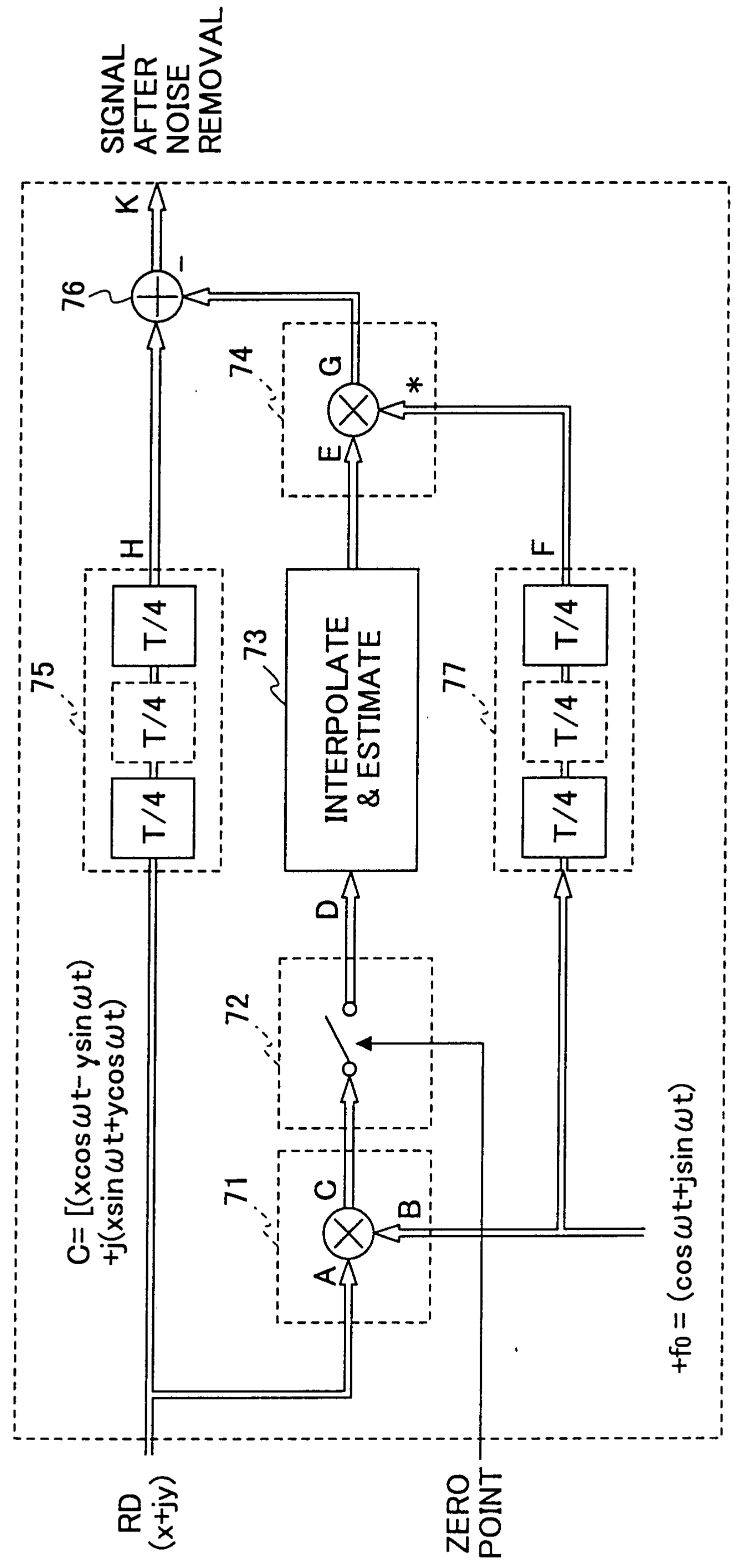
SIGNAL AFTER NOISE REMOVAL
K
76
−
74
G
*
E
75
H
T/4
T/4
T/4
73
INTERPOLATE & ESTIMATE
77
F
T/4
T/4
T/4
D
72
C= [(xcos ωt−ysin ωt) +j(xsin ωt+ycos ωt)]
71
C
A
B
+f0 = (cos ωt+jsin ωt)
RD (x+jy)
ZERO POINT

FIG.11

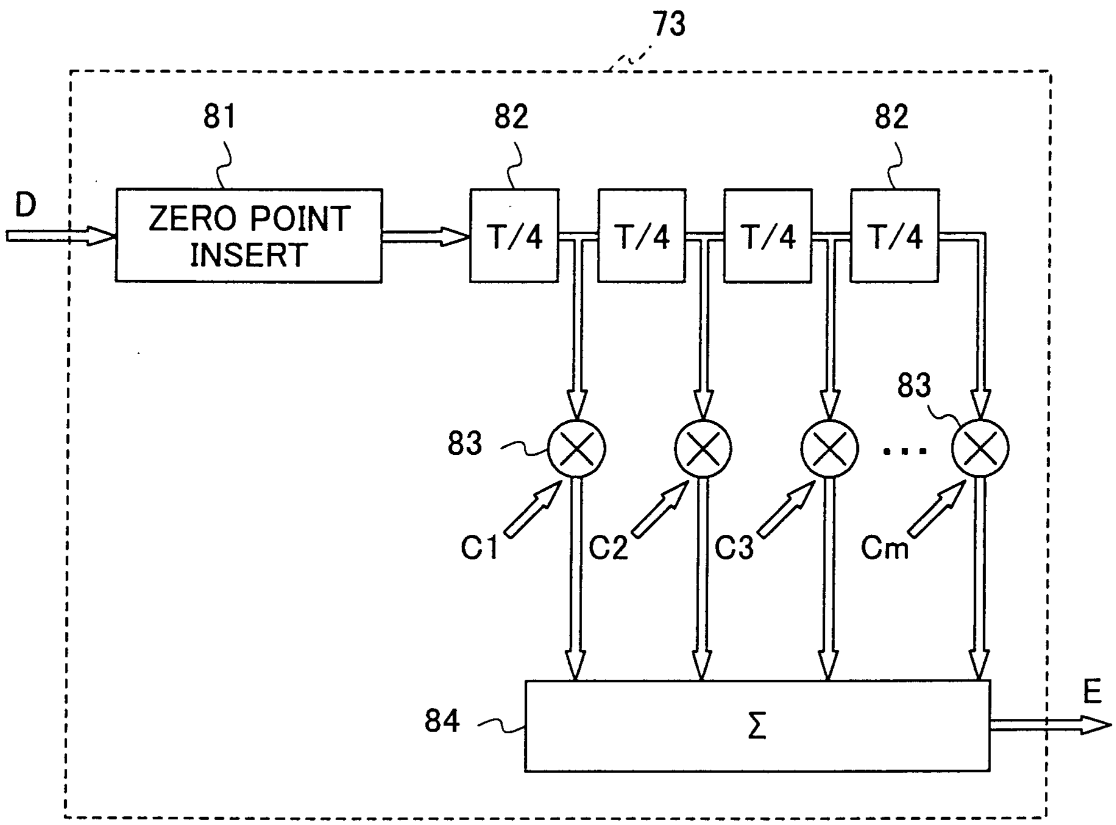

FIG.12A

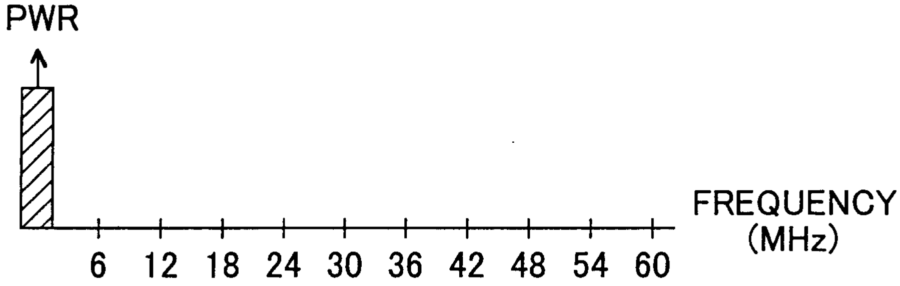


FIG.12B

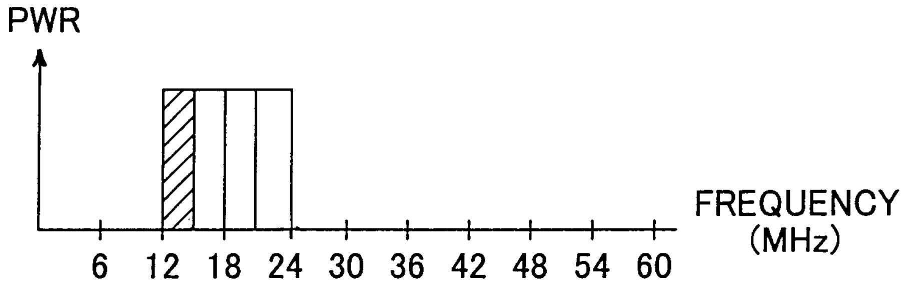


FIG.12C

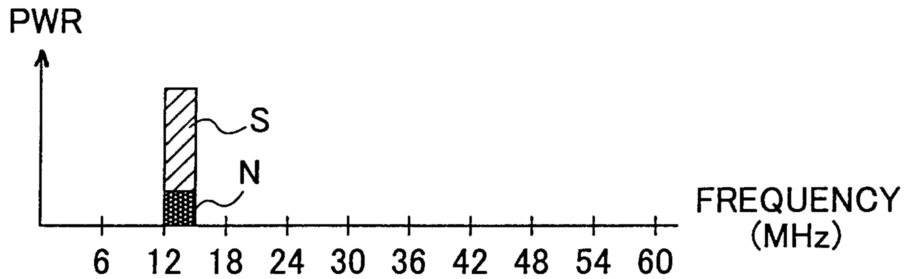


FIG.12D

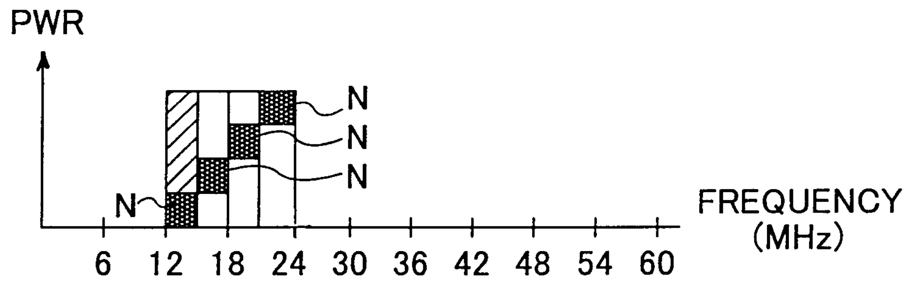

FIG.13

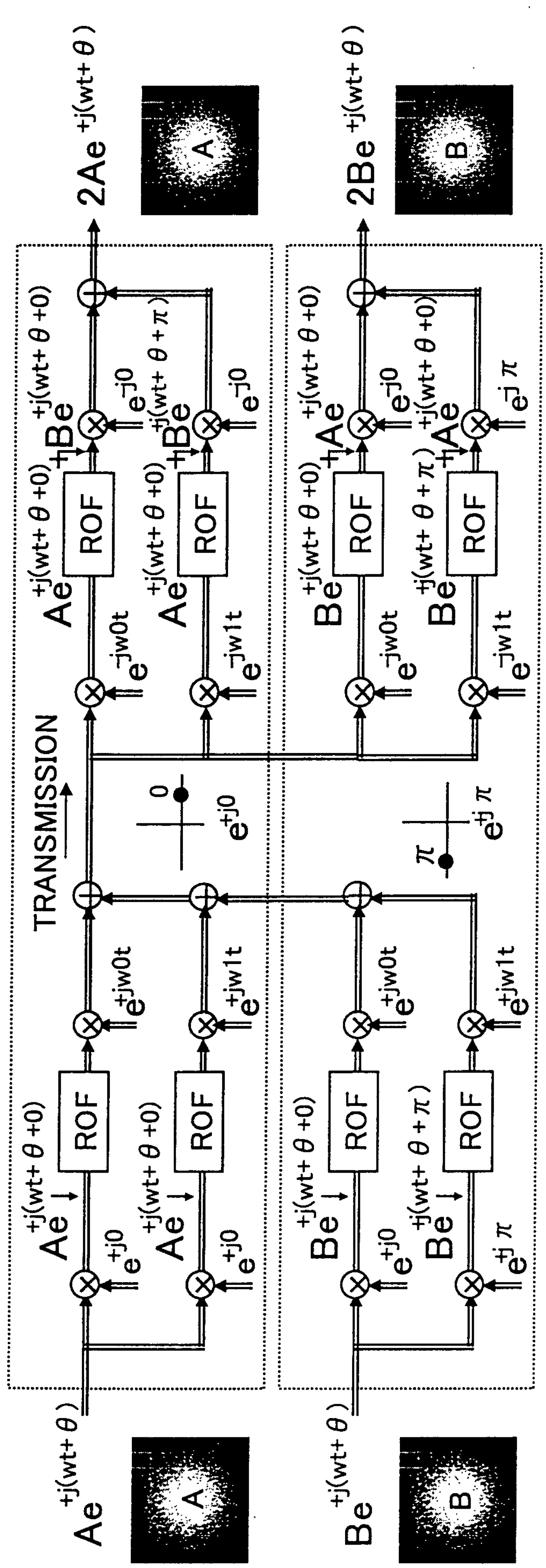
Ae+j(wt+θ)
A
Be+j(wt+θ)
B
ROF
TRANSMISSION
2Ae+j(wt+θ)
2Be+j(wt+θ)
e+j0
e+jπ
e+jw0t
e+jw1t
e-jw0t
e-jw1t
e-j0
e-jπ

FIG.14

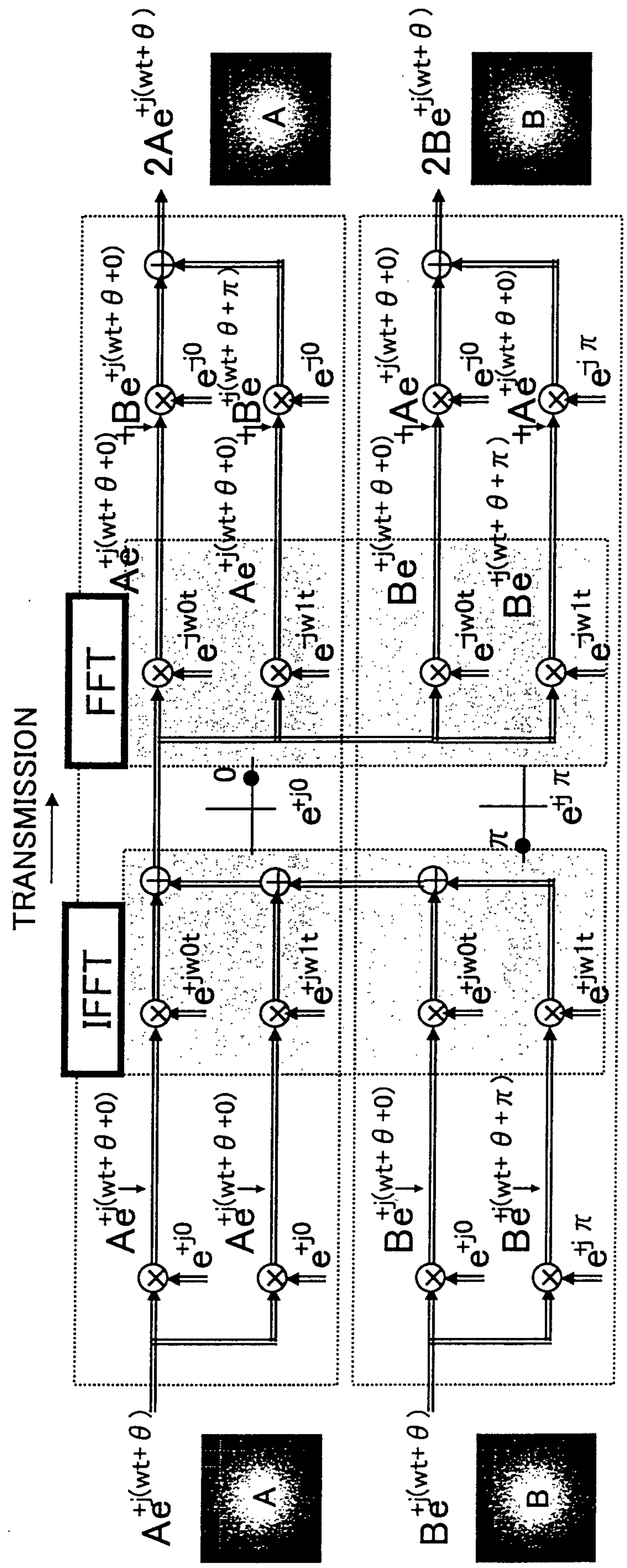
TRANSMISSION
IFFT
FFT
Ae+j(wt+θ)
Be+j(wt+θ)
2Ae+j(wt+θ)
2Be+j(wt+θ)
A
B
e+j0
e+jπ
e+jw0t
e+jw1t
e-jw0t
e-jw1t
e-j0
e-jπ
0
π

FIG.15

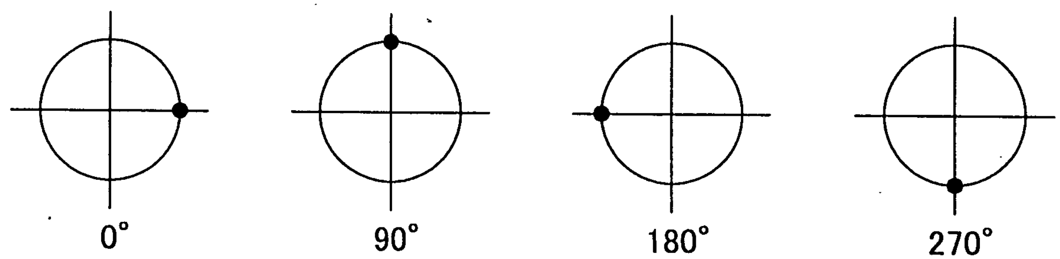


FIG.16

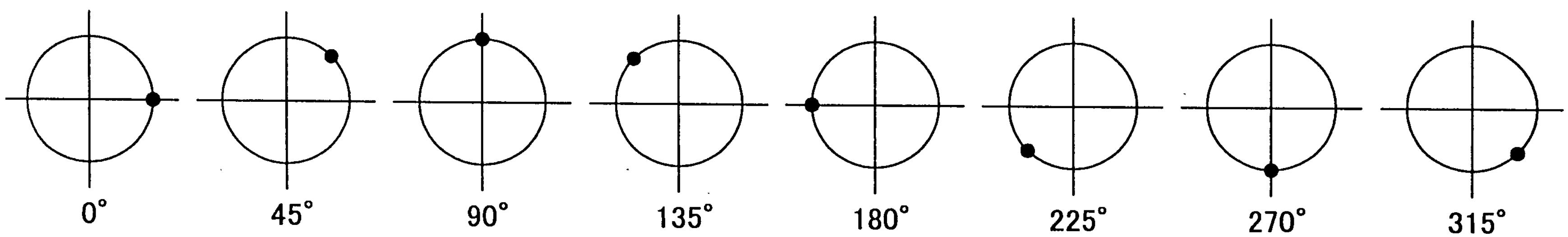

FIG.17A

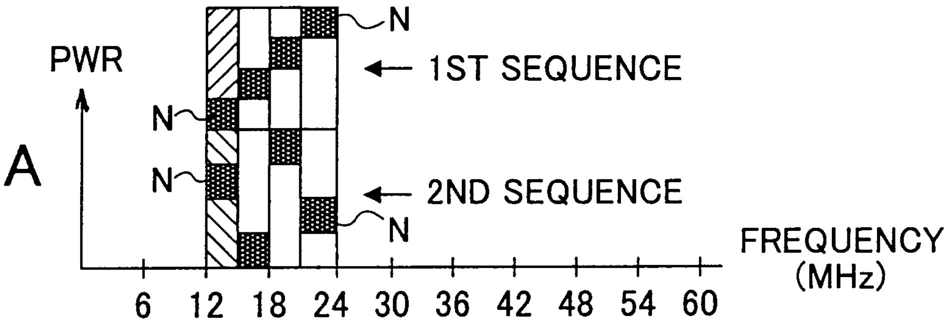


FIG.17B

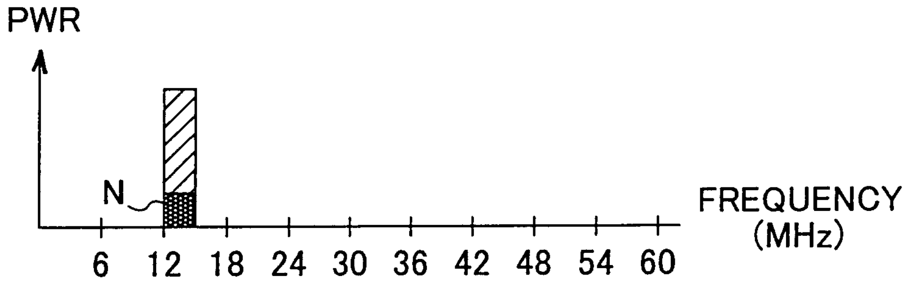


FIG.17C

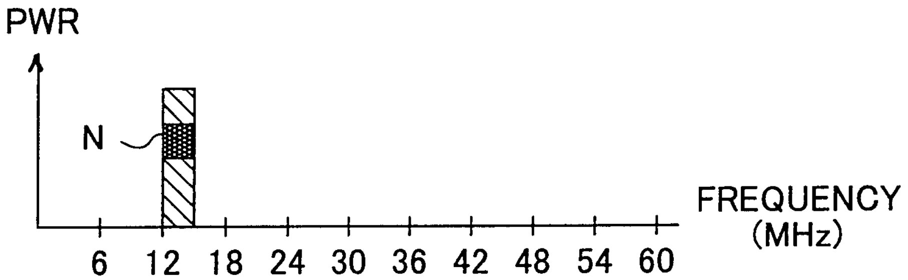

FIG.18

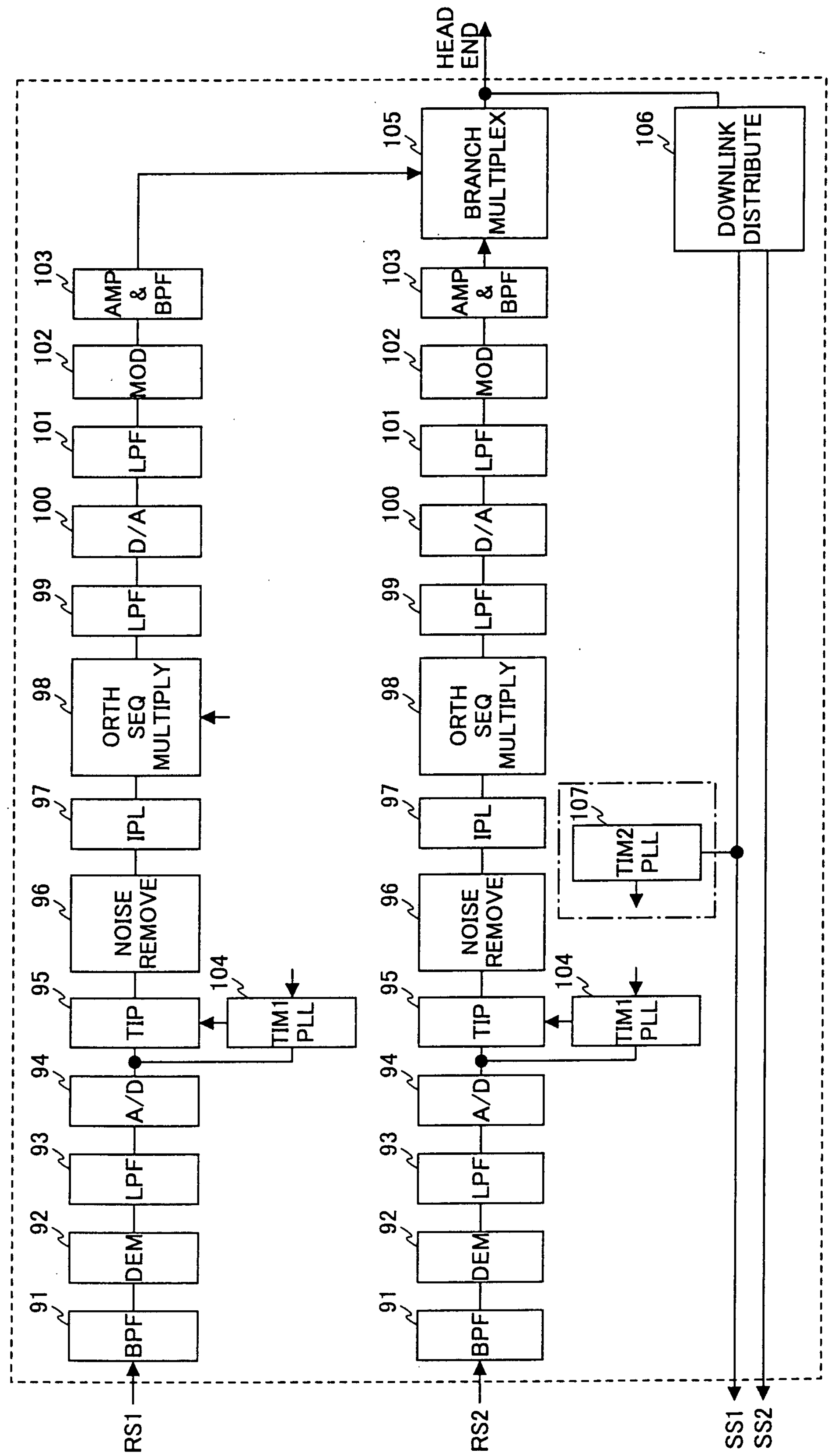
HEAD END
RS1
RS2
SS1
SS2
91 BPF
92 DEM
93 LPF
94 A/D
95 TIP
96 NOISE REMOVE
97 IPL
98 ORTH SEQ MULTIPLY
99 LPF
100 D/A
101 LPF
102 MOD
103 AMP & BPF
104 TIM1 PLL
105 BRANCH MULTIPLEX
106 DOWNLINK DISTRIBUTE
107 TIM2 PLL

FIG.19

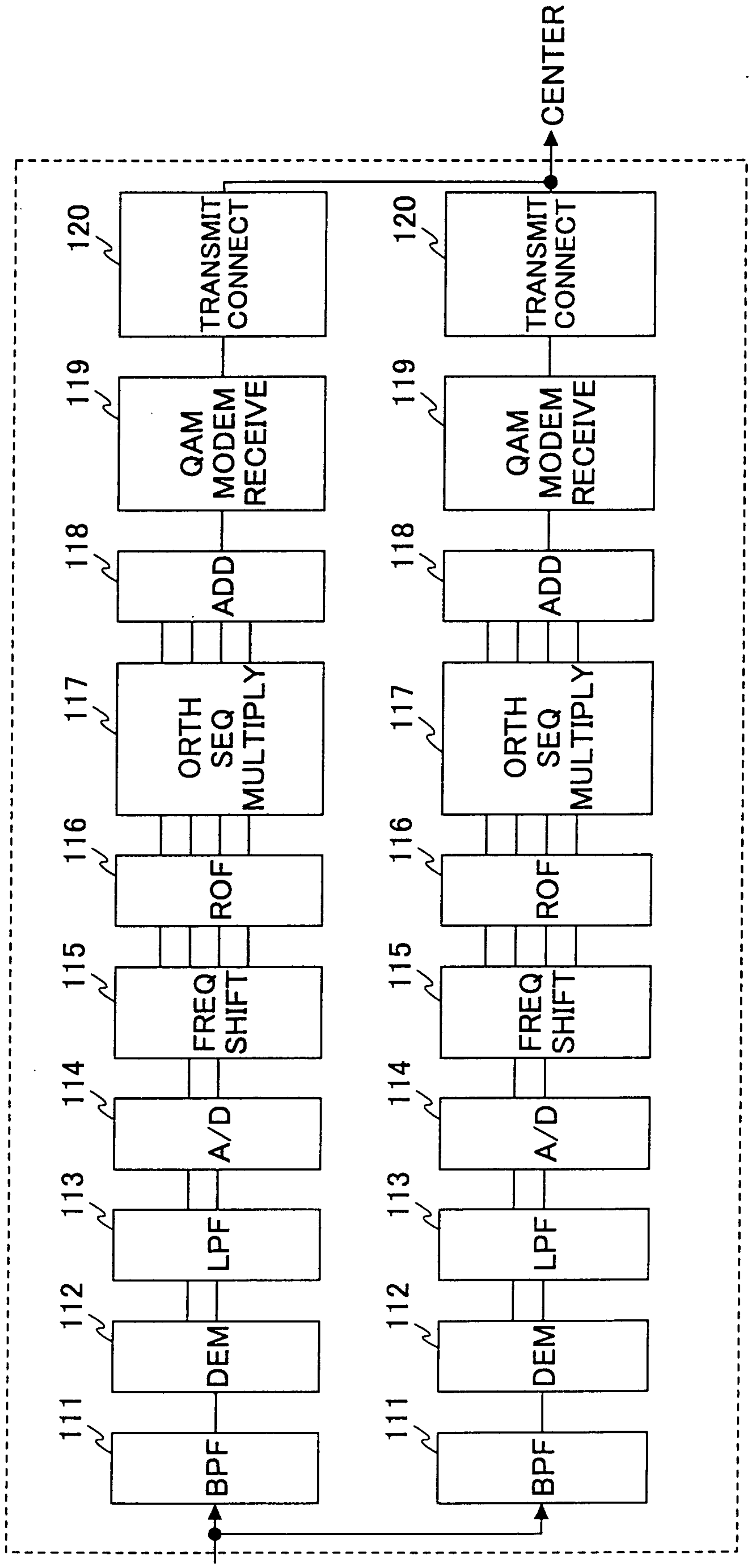
CENTER
120
TRANSMIT CONNECT
119
QAM MODEM RECEIVE
118
ADD
117
ORTH SEQ MULTIPLY
116
ROF
115
FREQ SHIFT
114
A/D
113
LPF
112
DEM
111
BPF

FIG.20

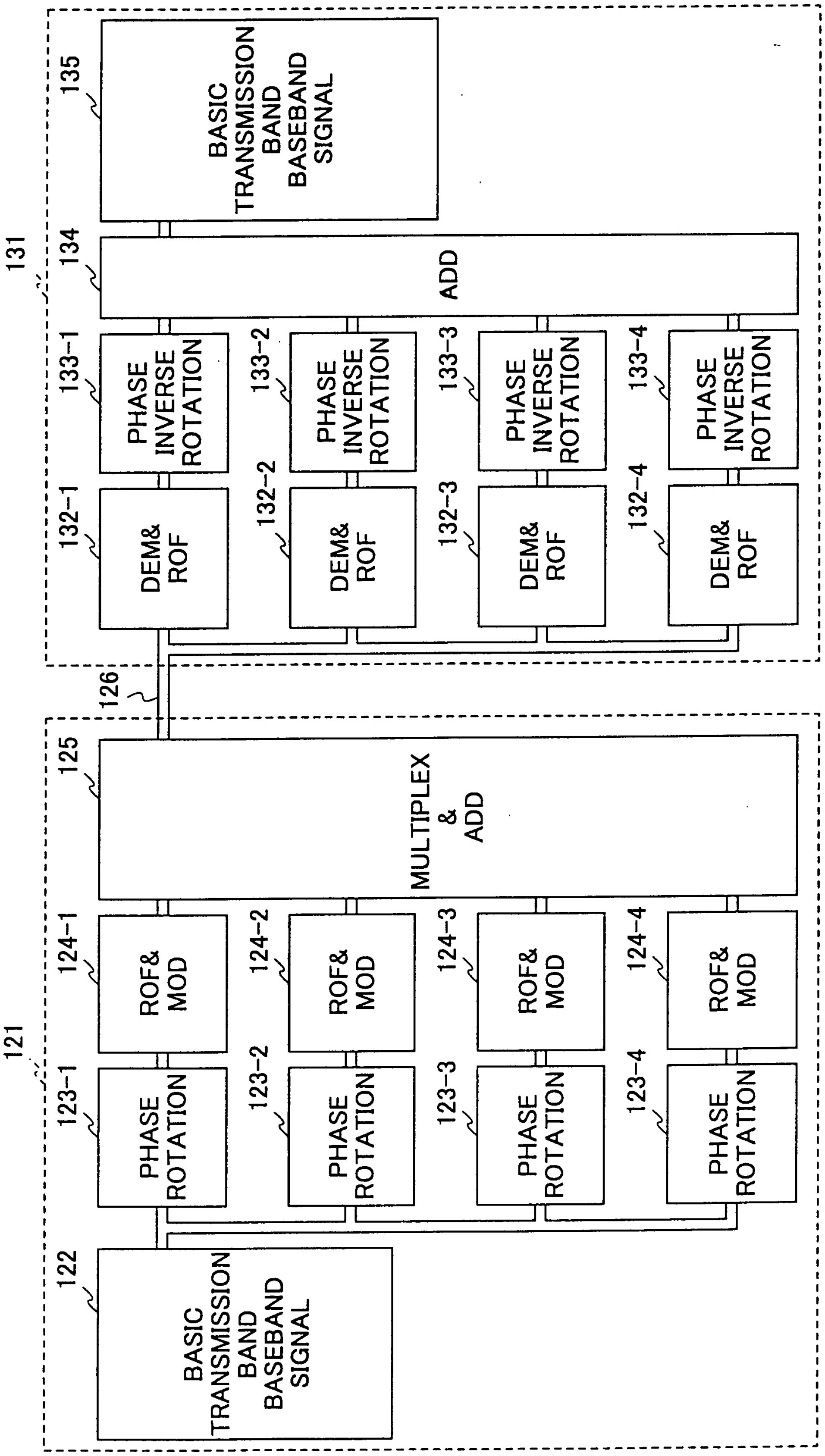
131
135
BASIC TRANSMISSION BAND BASEBAND SIGNAL
134
ADD
133-1
PHASE INVERSE ROTATION
133-2
PHASE INVERSE ROTATION
133-3
PHASE INVERSE ROTATION
133-4
PHASE INVERSE ROTATION
132-1
DEM& ROF
132-2
DEM& ROF
132-3
DEM& ROF
132-4
DEM& ROF
126
121
125
MULTIPLEX & ADD
124-1
ROF& MOD
124-2
ROF& MOD
124-3
ROF& MOD
124-4
ROF& MOD
123-1
PHASE ROTATION
123-2
PHASE ROTATION
123-3
PHASE ROTATION
123-4
PHASE ROTATION
122
BASIC TRANSMISSION BAND BASEBAND SIGNAL

FIG.21

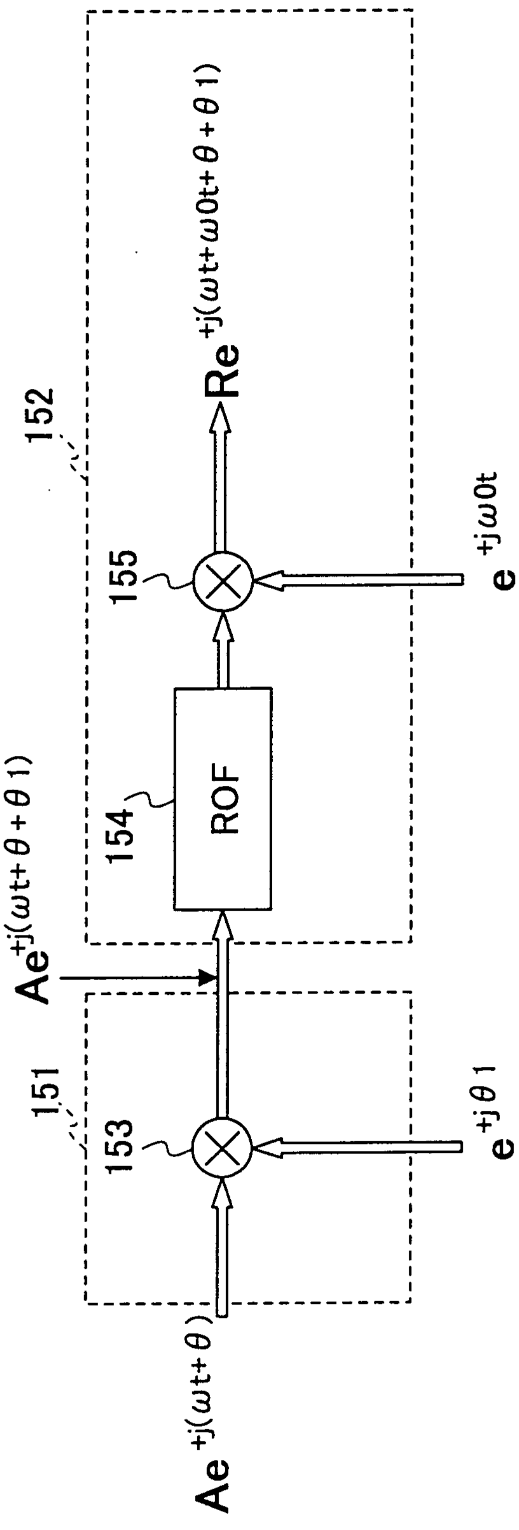
$Ae^{+j(\omega t+\theta)}$
151
153
$e^{+j\theta 1}$
$Ae^{+j(\omega t+\theta+\theta 1)}$
152
154
ROF
155
$e^{+j\omega 0t}$
$Re^{+j(\omega t+\omega 0t+\theta+\theta 1)}$

FIG.22

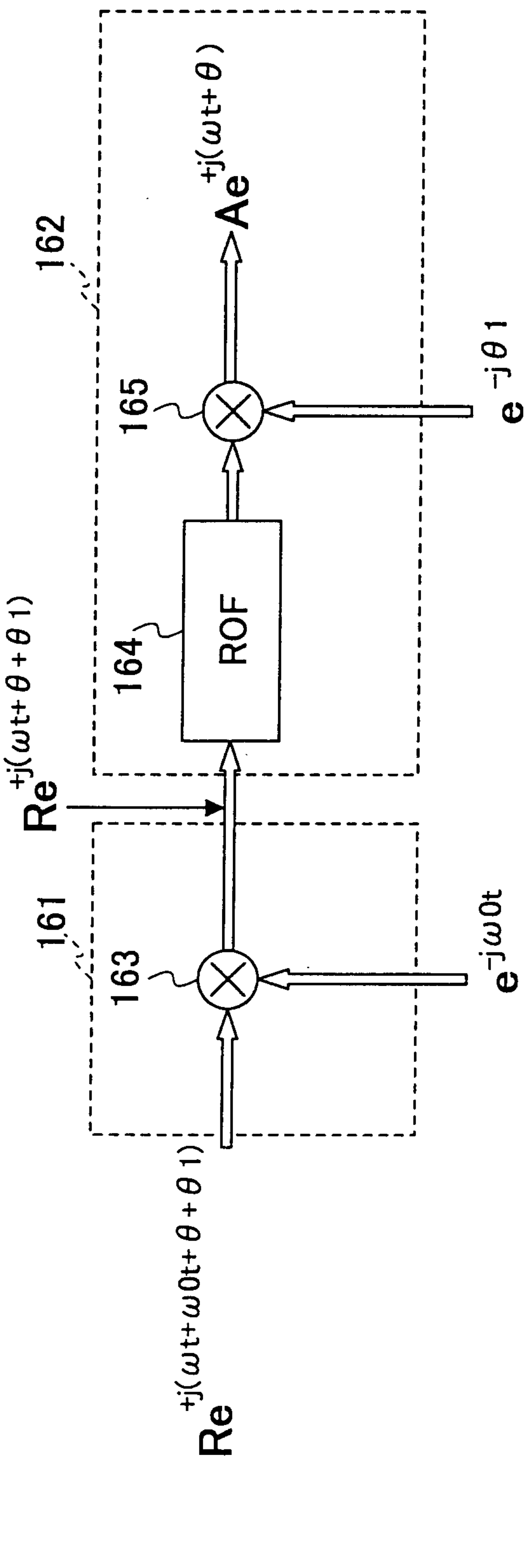
$Re^{+j(\omega t+\omega 0t+\theta+\theta 1)}$
161
163
$e^{-j\omega 0t}$
$Re^{+j(\omega t+\theta+\theta 1)}$
162
164
ROF
165
$e^{-j\theta 1}$
$Ae^{+j(\omega t+\theta)}$

FIG.23

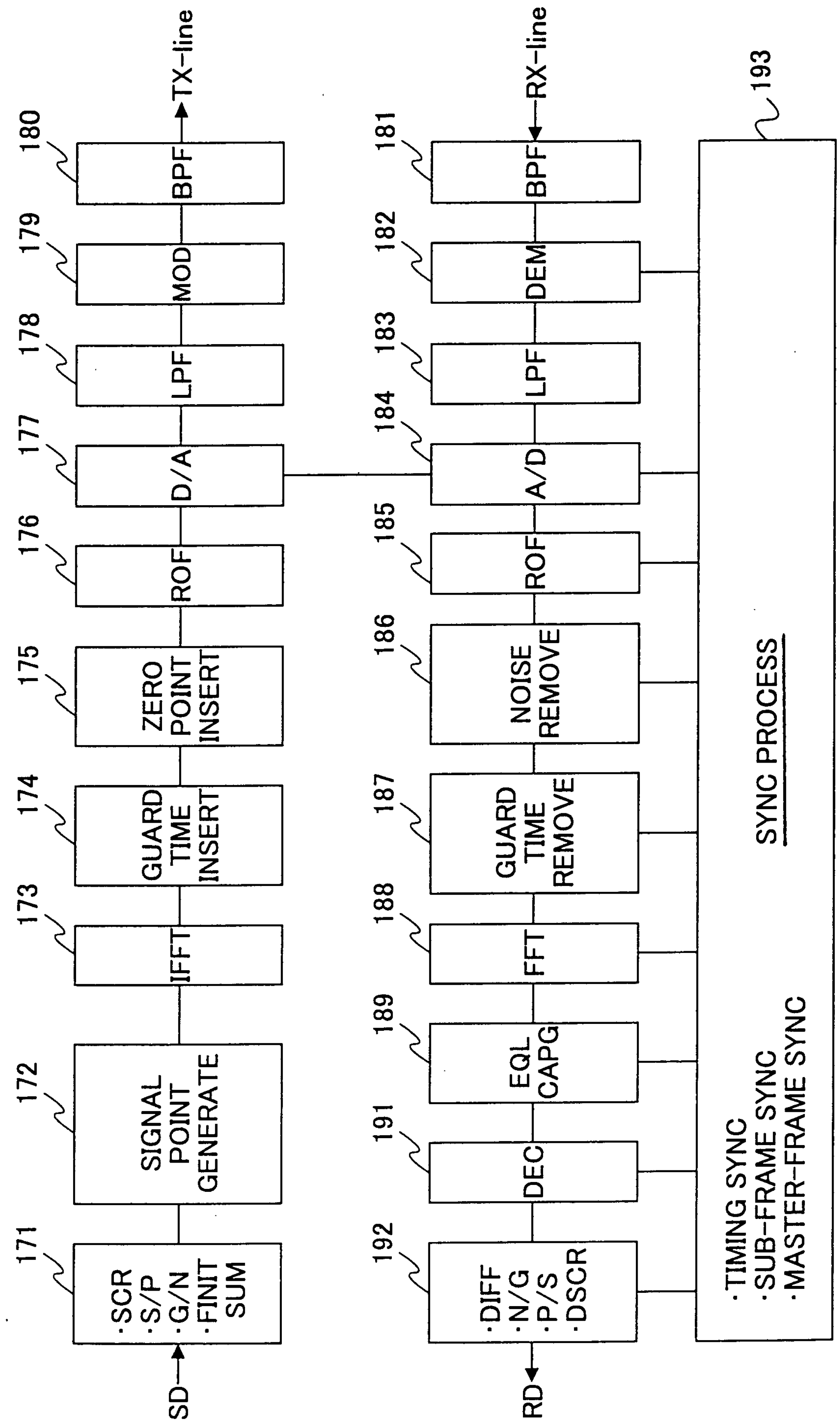
SD
·SCR
·S/P
·G/N
·FINIT SUM
SIGNAL POINT GENERATE
IFFT
GUARD TIME INSERT
ZERO POINT INSERT
ROF
D/A
LPF
MOD
BPF
TX-line
171
172
173
174
175
176
177
178
179
180
RD
·DIFF
·N/G
·P/S
·DSCR
DEC
EQL CAPG
FFT
GUARD TIME REMOVE
NOISE REMOVE
ROF
A/D
LPF
DEM
BPF
RX-line
192
191
189
188
187
186
185
184
183
182
181
·TIMING SYNC
·SUB-FRAME SYNC
·MASTER-FRAME SYNC
SYNC PROCESS
193

FIG.24A

FIG.24B